# EUROPEAN PATENT APPLICATION

(11) **EP 4 538 133 A1**
(43) Date of publication of application: **16.04.2025**
(21) Application number: 23819947.5
(22) Date of filing: 02.02.2023
(51) Int. Cl.: B60W 50/023, B60W 50/02, B60W 50/04, B60W 50/14, B60W 60/00

(54) **SIGNAL PROCESSING DEVICE OF VEHICLE AND COMMUNICATION DEVICE FOR VEHICLE COMMUNICATION DEVICE INCLUDING SAME**

(30) Priority: 10.06.2022 KR 20220070862; 27.09.2022 KR 20220122192
(71) Applicant: LG Electronics Inc., Yeongdeungpo-gu Seoul 07336 (KR)
(72) Inventor: LEE, Chulhee, Seoul 06772 (KR); JUNG, Junyoung, Seoul 06772 (KR); LEE, Eunkoo, Seoul 06772 (KR); PARK, Namyong, Seoul 06772 (KR); LEE, Dongkyu, Seoul 06772 (KR)
(74) Representative: Vossius & Partner Patentanwälte Rechtsanwälte mbB
(86) International application number: PCT/KR2023/001535
(87) International publication number: WO 2023/239008

(57) **Abstract**

A signal processing device in a vehicle and a vehicle communication device including the same according to an embodiment of the present disclosure include a processor configured to receive data by wire from a plurality of zonal signal processing devices or a communication device and process the received data, wherein the processor is configured to execute a hypervisor and execute a plurality of virtual machines on the hypervisor, wherein some virtual machine among the plurality of virtual machines is configured to operate as a master node of orchestration, and another virtual machine among the plurality of virtual machines is configured to operate as a worker node of orchestration. Accordingly, a service or application may be efficiently processed.

## Description

### BACKGROUND

### 1. Technical Field

. The present disclosure relates to a signal processing device in a vehicle and a vehicle communication device including the same, and more particularly to a signal processing device in a vehicle capable of efficiently processing a service or application, and a vehicle communication device including the signal processing device.

### 2. Description of the Related Art

. A vehicle is a machine that allows a user to move in a desired direction. A typical example of the vehicle is an automobile.

. Meanwhile, a signal processing device for vehicles is mounted in a vehicle for convenience of users using the vehicle.

. The signal processing device in the vehicle receives sensor data from various vehicle internal sensor devices and processes the received sensor data.

. For example, the signal processing device is required to receive the sensor data from the sensor devices and process the sensor data within a predetermined period of time.

. Meanwhile, if considerable resources are used for specific data packet processing, a problem occurs in that data processing may not be rapidly and stably performed for processing another data.

. Meanwhile, Korean Laid-open Patent Publication No. 10-2017-0043002 as related art discloses a method of operating a communication node in a network.

. However, the related art has a problem in that the method does not disclose a virtualization structure for executing a service or application, and thus may not efficiently process the service or application.

### SUMMARY

. It is an objective of the present disclosure to provide a signal processing device in a vehicle (hereinafter referred to as a vehicle signal processing device) capable of efficiently processing a service or application, and a vehicle communication device including the vehicle signal processing device.

. It is another objective of the present disclosure to provide a vehicle signal processing device capable of rapidly and stably processing a service or application, and a vehicle communication device including the vehicle signal processing device.

. It is yet another objective of the present disclosure to provide a vehicle signal processing device capable of duplicating a service or application for processing, and a vehicle communication device including the vehicle signal processing device.

. In accordance with an aspect of the present disclosure, the above and other objectives can be accomplished by providing a signal processing device in a vehicle and a vehicle communication device including the same, the signal processing device including a processor configured to receive data by wire from a plurality of zonal signal processing devices or a communication device and process the received data, wherein the processor is configured to execute a hypervisor and execute a plurality of virtual machines on the hypervisor, wherein some virtual machine among the plurality of virtual machines is configured to operate as a master node of orchestration, and another virtual machine among the plurality of virtual machines is configured to operate as a worker node of orchestration.

. Meanwhile, the processor may be configured to select at least one of a worker node in the plurality of zonal signal processing devices, a worker node in a server, or a worker node in the signal processing device, and execute a service or application on the selected worker node.

. Meanwhile, the master node may be configured to execute an application controller, a node controller, a scheduler, and an orchestration server, wherein the worker node may be configured to execute an orchestration proxy, container runtime, container, and node manager.

. Meanwhile, in order to execute a service or application, the master node may be configured to transmit a command to at least one worker node based on scheduling, and a container in the worker node is configured to receive the command may be configured to operate based on the command.

. Meanwhile, if it is required to duplicate a service or application, the master node may perform one of software duplication, hardware duplication, and hybrid duplication depending on the service or application.

. Meanwhile, the master node may be configured to selectively duplicate a service or application or perform one of software duplication, hardware duplication, and hybrid duplication, based on a safety level of a service or application, available resources, or a state of the worker node.

. Meanwhile, the processor may be configured to select at least one of the worker node in the plurality of zonal signal processing devices, the worker node in the server, or the worker node in the signal processing device, based on a safety level of a service or application to be executed.

. Meanwhile, in response to a safety level of a first service or a first application to be executed being a first level, the processor may be configured to select the worker node in the plurality of zonal signal processing devices from among the worker node in the plurality of zonal signal processing devices, the worker node in the server, or the worker node in the signal processing device, and execute the first service or the first application on the worker node in the plurality of zonal signal processing devices.

. Meanwhile, while executing the first service or first application in the plurality of zonal signal processing devices, in response to a safety level of a second service or a second application to be executed being the first level, the processor may be configured to select the worker node in one of the plurality of zonal signal processing devices and the worker node in the server, and execute the second service or the second application on the worker node in one of the plurality of zonal signal processing devices and the worker node in the server.

. Meanwhile, in response to a safety level of a service or application to be executed being a second level higher than the first level, the processor may be configured to execute the service or application on the worker node in the signal processing device among the worker node in the plurality of zonal signal processing devices, the worker node in the server, or the worker node in the signal processing device.

. Meanwhile, the processor may be configured to execute the service or application on the worker node in the signal processing device, based on software duplication, hardware duplication, or hybrid duplication.

. Meanwhile, the processor may be configured to execute a driver face detection service or a driver face recognition service, which is executed before a vehicle starts, on the worker node in the plurality of zonal signal processing devices or the worker node in the server.

. Meanwhile, the processor may be configured to execute a driver monitoring service, which is executed after the vehicle starts, on the worker node in the signal processing device.

. Meanwhile, based on camera data from the plurality of zonal signal processing devices, the processor may be configured to execute a lane detection service, a lane recognition service, a lane keeping analysis service for a general road, or a lane keeping analysis service for a highway.

. Meanwhile, the processor may be configured to execute the lane detection service on the worker node in the plurality of zonal signal processing devices, among the worker node in the plurality of zonal signal processing devices, the worker node in the server, and the worker node in the signal processing device.

. Meanwhile, the processor may be configured to execute the lane recognition service on the worker node in one of the plurality of zonal signal processing devices and the worker node in the server, among the worker node in the plurality of zonal signal processing devices, the worker node in the server, or the worker node in the signal processing device.

. Meanwhile, the processor may be configured to execute the lane keeping analysis service for the general road on the worker node in the signal processing device and the worker node in one of the plurality of zonal signal processing devices, among the worker node in the plurality of zonal signal processing devices, the worker node in the server, or the worker node in the signal processing device.

. Meanwhile, the processor may be configured to execute the lane keeping analysis service for the highway on the worker node in one of the plurality of zonal signal processing devices, among the worker node in the plurality of zonal signal processing devices, the worker node in the server, or the worker node in the signal processing device.

. In accordance with another aspect of the present disclosure, the above and other objectives can be accomplished by providing a signal processing device in a vehicle and a vehicle communication device including the same, the signal processing device including a processor configured to receive data by wire from a plurality of zonal signal processing devices or a communication device and process the received data, wherein the processor is configured to execute a hypervisor and execute a plurality of virtual machines on the hypervisor, wherein some virtual machine among the plurality of virtual machines is configured to operate as a master node of orchestration, wherein the master node is configured to selectively duplicate a service or application or perform one of software duplication, hardware duplication, and hybrid duplication, based on a safety level of a service or application, available resources, or a state of the worker node.

. Meanwhile, the master node may be configured to selectively duplicate a service or application or perform one of software duplication, hardware duplication, or hybrid duplication, on at least one of the worker node in the plurality of zonal signal processing devices, the worker node in the server, or the worker node in the signal processing device, based on a safety level of the service or application, available resources, or a state of the worker node.

### EFFECTS OF THE DISCLOSURE

. A signal processing device in a vehicle and a vehicle communication device including the same according to an embodiment of the present disclosure include a processor configured to receive data by wire from a plurality of zonal signal processing devices or a communication device and process the received data, wherein the processor is configured to execute a hypervisor and execute a plurality of virtual machines on the hypervisor, wherein some virtual machine among the plurality of virtual machines is configured to operate as a master node of orchestration, and another virtual machine among the plurality of virtual machines is configured to operate as a worker node of orchestration. Accordingly, a service or application may be efficiently processed. Particularly, the service or application may be rapidly and stably processed.

. Meanwhile, the processor may be configured to select at least one of a worker node in the plurality of zonal signal processing devices, a worker node in a server, or a worker node in the signal processing device, and execute a service or application on the selected worker node. Accordingly, a service or application may be efficiently processed.

. Meanwhile, the master node may be configured to execute an application controller, a node controller, a scheduler, and an orchestration server, wherein the worker node may be configured to execute an orchestration proxy, container runtime, container, and node manager. Accordingly, a service or application may be efficiently processed by the worker node.

. Meanwhile, in order to execute a service or application, the master node may be configured to transmit a command to at least one worker node based on scheduling, and a container in the worker node is configured to receive the command may be configured to operate based on the command. Accordingly, a service or application may be efficiently processed by the worker node.

. Meanwhile, if it is required to duplicate a service or application, the master node may perform one of software duplication, hardware duplication, and hybrid duplication depending on the service or application. Accordingly, the service or application may be duplicated for processing. As a result, the service or application may be rapidly and stably processed.

. Meanwhile, the master node may be configured to selectively duplicate a service or application or perform one of software duplication, hardware duplication, and hybrid duplication, based on a safety level of a service or application, available resources, or a state of the worker node. Accordingly, the service or application may be duplicated for processing. As a result, the service or application may be rapidly and stably processed.

. Meanwhile, the processor may be configured to select at least one of the worker node in the plurality of zonal signal processing devices, the worker node in the server, or the worker node in the signal processing device, based on a safety level of a service or application to be executed. Accordingly, a service or application may be efficiently processed by the worker node.

. Meanwhile, in response to a safety level of a first service or a first application to be executed being a first level, the processor may be configured to select the worker node in the plurality of zonal signal processing devices from among the worker node in the plurality of zonal signal processing devices, the worker node in the server, or the worker node in the signal processing device, and execute the first service or the first application on the worker node in the plurality of zonal signal processing devices. Accordingly, a service or application may be efficiently processed by the worker node.

. Meanwhile, while executing the first service or first application in the plurality of zonal signal processing devices, in response to a safety level of a second service or a second application to be executed being the first level, the processor may be configured to select the worker node in one of the plurality of zonal signal processing devices and the worker node in the server, and execute the second service or the second application on the worker node in one of the plurality of zonal signal processing devices and the worker node in the server. Accordingly, a service or application may be efficiently processed by the worker node.

. Meanwhile, in response to a safety level of a service or application to be executed being a second level higher than the first level, the processor may be configured to execute the service or application on the worker node in the signal processing device among the worker node in the plurality of zonal signal processing devices, the worker node in the server, or the worker node in the signal processing device. Accordingly, a service or application may be efficiently processed by the worker node.

. Meanwhile, the processor may be configured to execute the service or application on the worker node in the signal processing device, based on software duplication, hardware duplication, or hybrid duplication. Accordingly, the service or application may be duplicated for processing. As a result, the service or application may be rapidly and stably processed.

. Meanwhile, the processor may be configured to execute a driver face detection service or a driver face recognition service, which is executed before a vehicle starts, on the worker node in the plurality of zonal signal processing devices or the worker node in the server. Accordingly, a service or application may be efficiently processed by the worker node.

. Meanwhile, the processor may be configured to execute a driver monitoring service, which is executed after the vehicle starts, on the worker node in the signal processing device. Accordingly, a service or application may be efficiently processed by the worker node.

. Meanwhile, based on camera data from the plurality of zonal signal processing devices, the processor may be configured to execute a lane detection service, a lane recognition service, a lane keeping analysis service for a general road, or a lane keeping analysis service for a highway. Accordingly, a service or application may be efficiently processed.

. Meanwhile, the processor may be configured to execute the lane detection service on the worker node in the plurality of zonal signal processing devices, among the worker node in the plurality of zonal signal processing devices, the worker node in the server, and the worker node in the signal processing device. Accordingly, a service or application may be efficiently processed by the worker node.

. Meanwhile, the processor may be configured to execute the lane recognition service on the worker node in one of the plurality of zonal signal processing devices and the worker node in the server, among the worker node in the plurality of zonal signal processing devices, the worker node in the server, or the worker node in the signal processing device. Accordingly, a service or application may be efficiently processed by the worker node.

. Meanwhile, the processor may be configured to execute the lane keeping analysis service for the general road on the worker node in the signal processing device and the worker node in one of the plurality of zonal signal processing devices, among the worker node in the plurality of zonal signal processing devices, the worker node in the server, or the worker node in the signal processing device. Accordingly, a service or application may be efficiently processed by the worker node.

. Meanwhile, the processor may be configured to execute the lane keeping analysis service for the highway on the worker node in one of the plurality of zonal signal processing devices, among the worker node in the plurality of zonal signal processing devices, the worker node in the server, or the worker node in the signal processing device. Accordingly, a service or application may be efficiently processed by the worker node.

. A signal processing device in a vehicle and a vehicle communication device including the same according to another embodiment of the present disclosure include a processor configured to receive data by wire from a plurality of zonal signal processing devices or a communication device and process the received data, wherein the processor is configured to execute a hypervisor and execute a plurality of virtual machines on the hypervisor, wherein some virtual machine among the plurality of virtual machines is configured to operate as a master node of orchestration, wherein the master node is configured to selectively duplicate a service or application or perform one of software duplication, hardware duplication, and hybrid duplication, based on a safety level of a service or application, available resources, or a state of the worker node. Accordingly, a service or application may be efficiently processed. Particularly, the service or application may be rapidly and stably processed.

. Meanwhile, the master node may be configured to selectively duplicate a service or application or perform one of software duplication, hardware duplication, or hybrid duplication, on at least one of the worker node in the plurality of zonal signal processing devices, the worker node in the server, or the worker node in the signal processing device, based on a safety level of the service or application, available resources, or a state of the worker node. Accordingly, the service or application may be duplicated for processing. As a result, the service or application may be rapidly and stably processed.

### BRIEF DESCRIPTION OF THE DRAWINGS

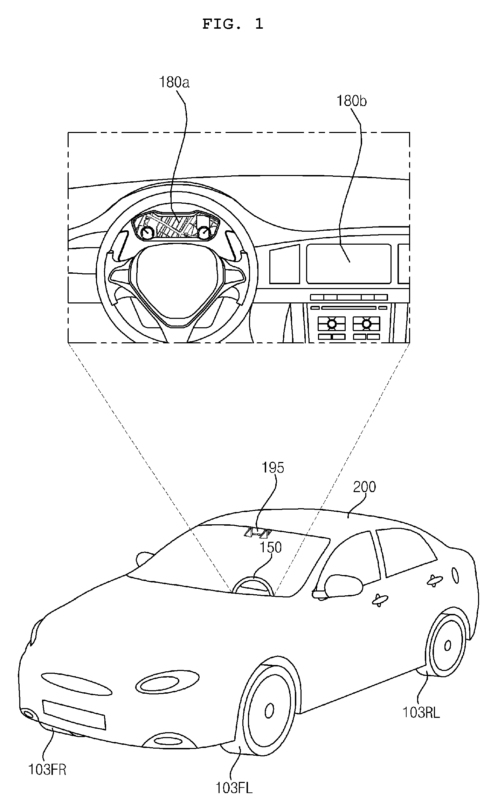

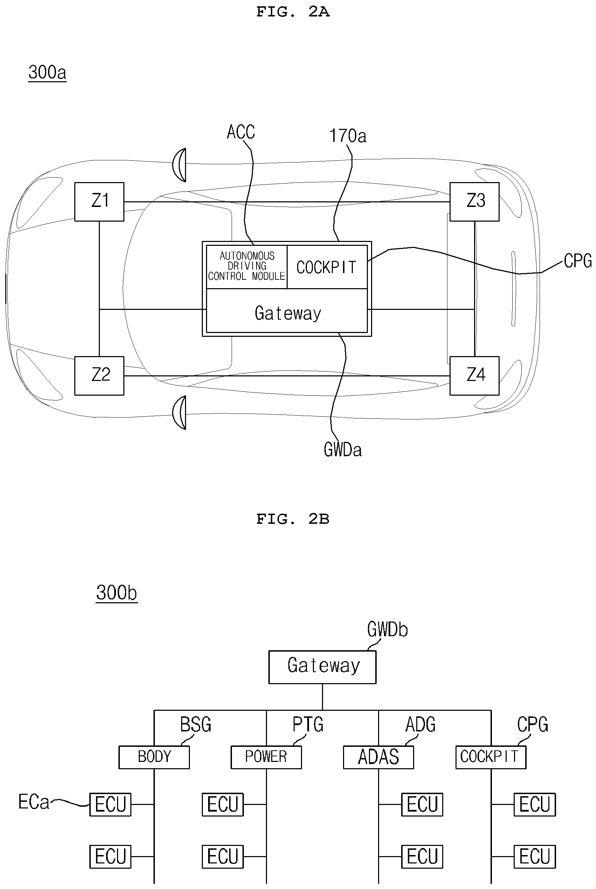

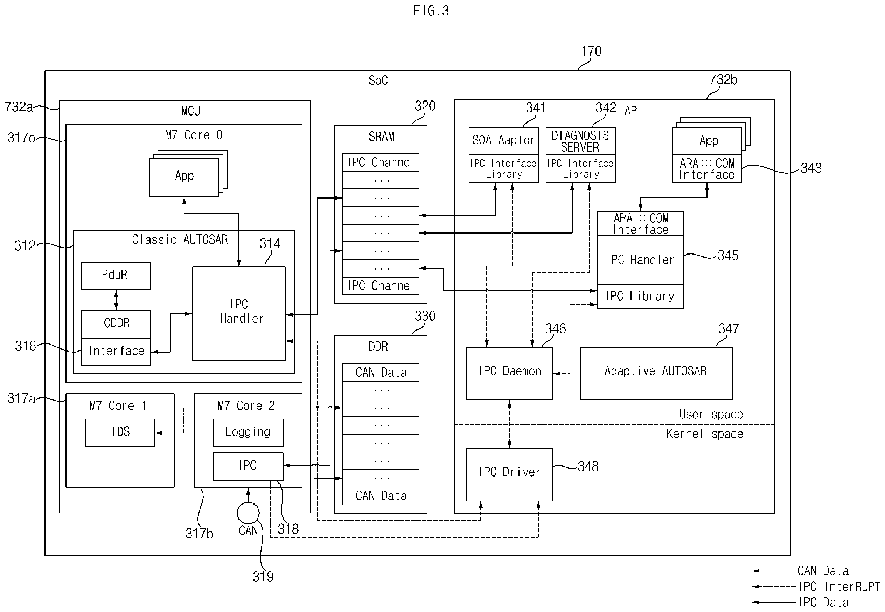

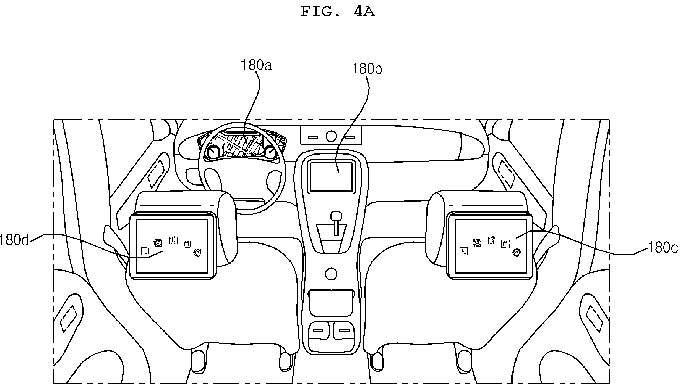

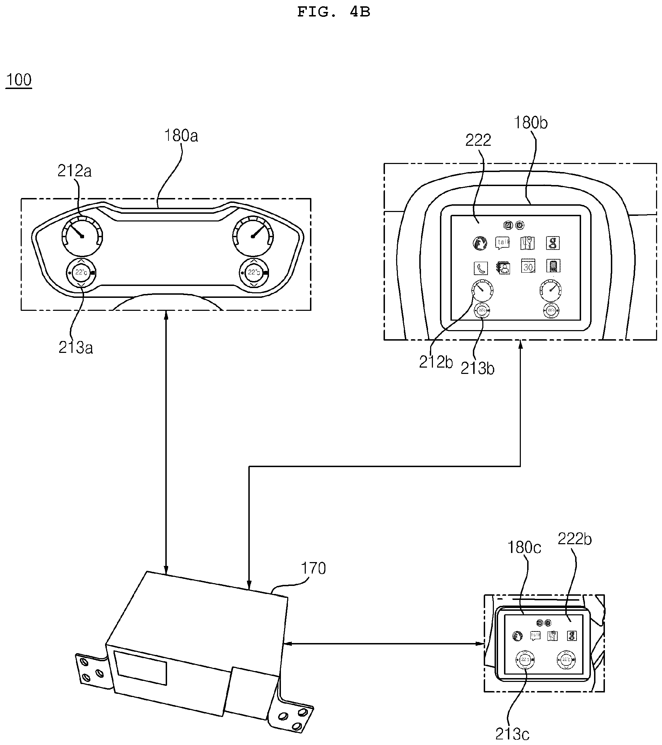

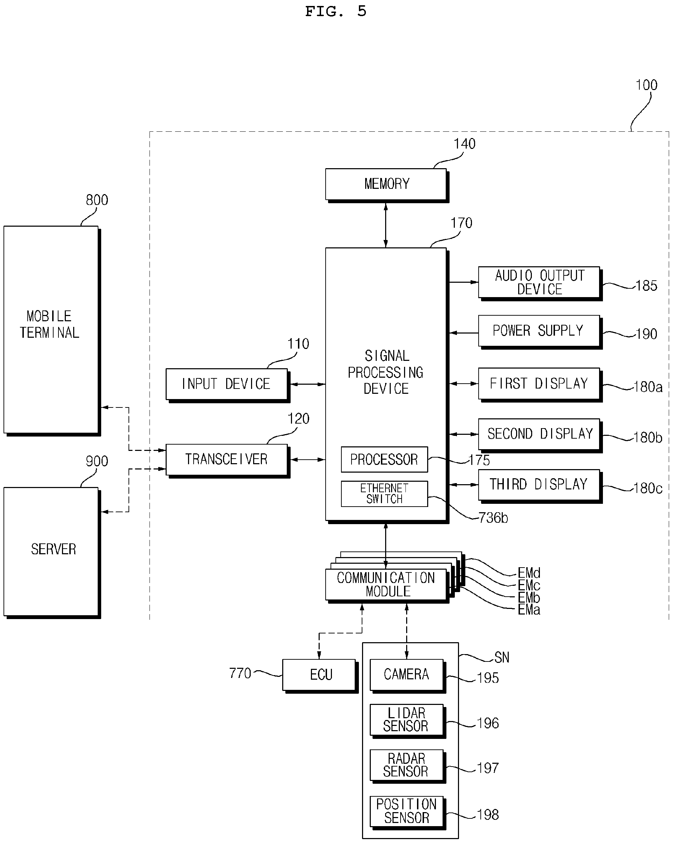

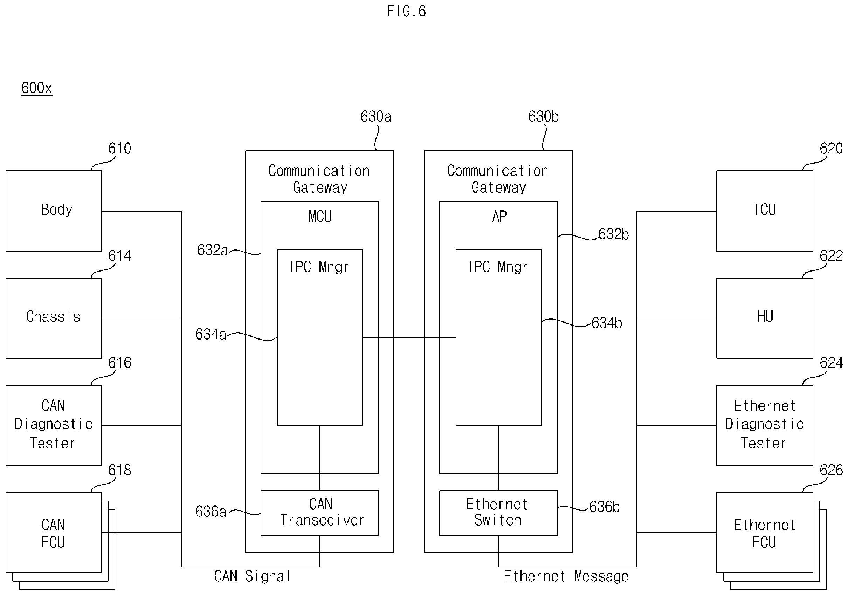

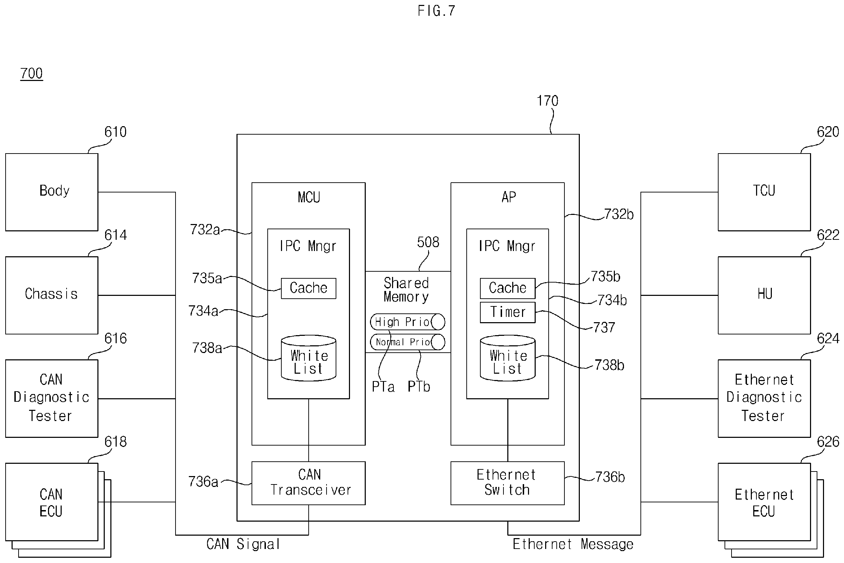

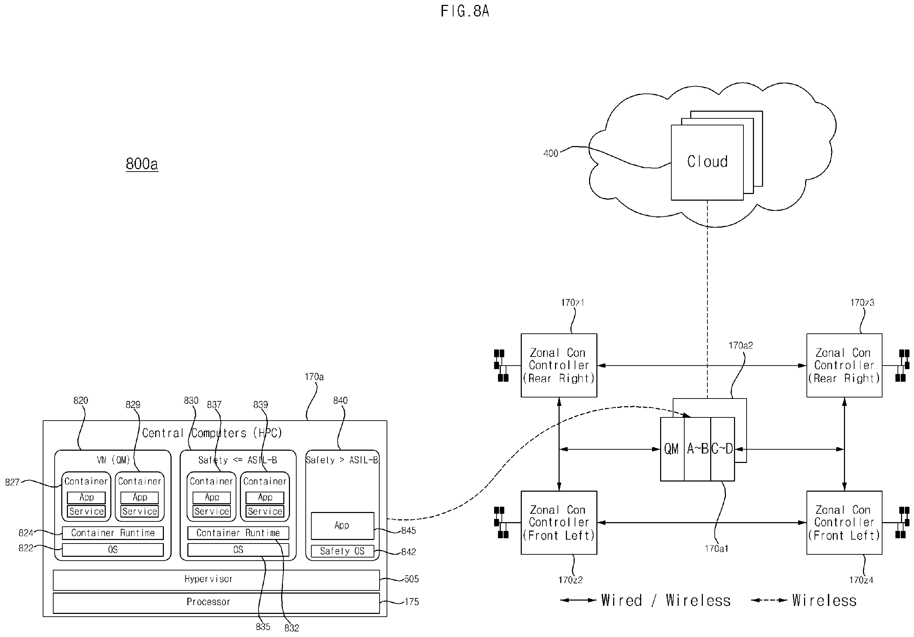

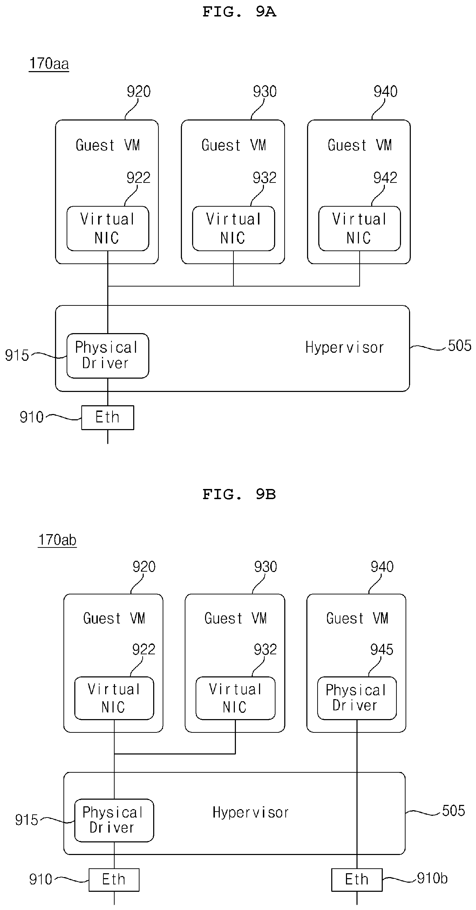

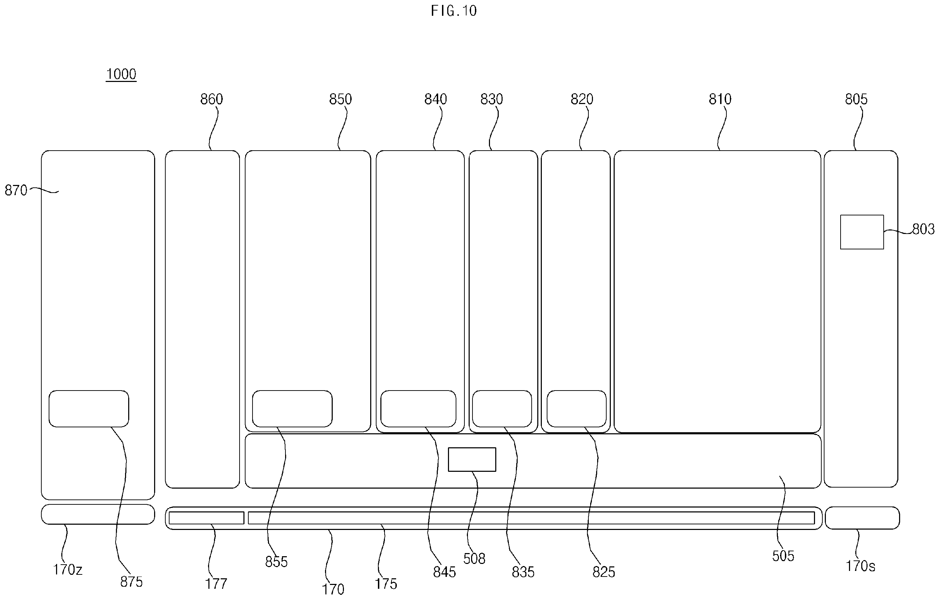

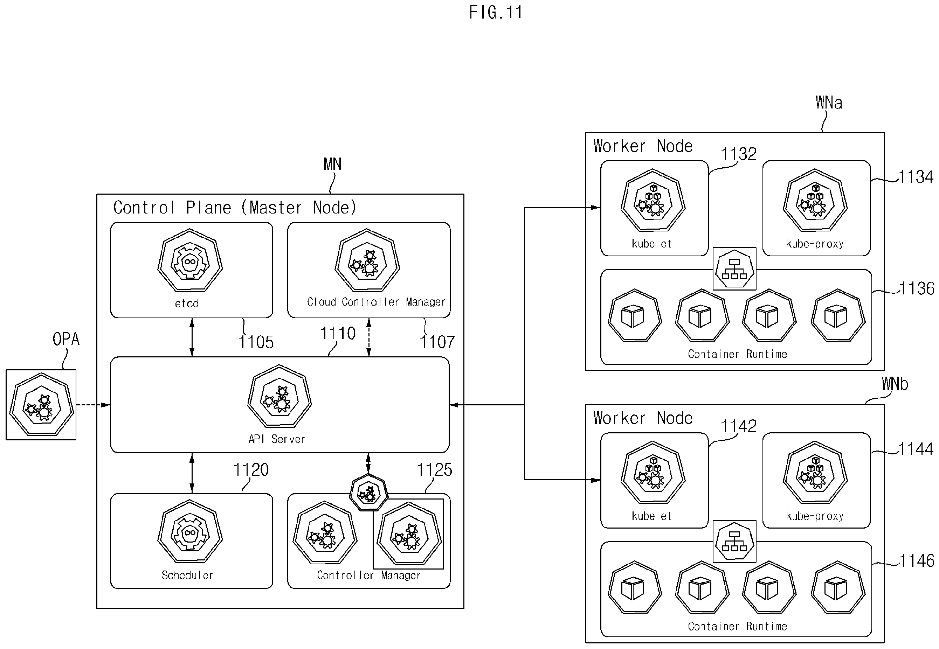

. FIG. 1 is a diagram illustrating an example of the exterior and interior of a vehicle;
. FIGS. 2A to 2C are diagrams illustrating various architectures of a vehicle communication gateway according to an embodiment of the present disclosure;
. FIG. 3 is an exemplary internal block diagram of a signal processing device of FIG. 2A;
. FIG. 4A is a diagram illustrating an example of an arrangement of a vehicle display apparatus in a vehicle according to an embodiment of the present disclosure;
. FIG. 4B is a diagram illustrating another example of an arrangement of a vehicle display apparatus in a vehicle according to an embodiment of the present disclosure;
. FIG. 5 is an exemplary internal block diagram of the vehicle display apparatus of FIG. 4B;
. FIG. 6 is an internal block diagram illustrating an example of a vehicle communication device;
. FIG. 7 is an internal block diagram illustrating another example of a vehicle communication device;
. FIGS. 8A to 8D are diagrams illustrating various examples of a vehicle communication device according to an embodiment of the present disclosure;
. FIGS. 9A to 9F are diagrams illustrating various examples of data transmission schemes of a signal processing device of FIGS. 8A to 8D;
. FIG. 10 is a diagram illustrating an example of a vehicle communication system according to an embodiment of the present disclosure; and
. FIGS. 11 to 21F are diagrams referred to in the description of FIG. 10.

### DETAILED DESCRIPTION

. Hereinafter, the present disclosure will be described in detail with reference to the accompanying drawings.

. With respect to constituent elements used in the following description, suffixes "module" and "unit" are given only in consideration of ease in preparation of the specification, and do not have or serve different meanings. Accordingly, the suffixes "module" and "unit" may be used interchangeably.

. FIG. 1 is a diagram illustrating an example of the exterior and interior of a vehicle.

. Referring to the figure, the vehicle 200 is moved by a plurality of wheels 103FR, 103FL, 103RL,... rotated by a power source and a steering wheel 150 configured to adjust an advancing direction of the vehicle 200.

. Meanwhile, the vehicle 200 may be provided with a camera 195 configured to acquire an image of the front of the vehicle.

. Meanwhile, the vehicle 200 may be further provided therein with a plurality of displays 180a and 180b configured to display images and information.

. In FIG. 1, a cluster display 180a and an audio video navigation (AVN) display 180b are illustrated as the plurality of displays 180a and 180b. In addition, a head up display (HUD) may also be used.

. Meanwhile, the audio video navigation (AVN) display 180b may also be called a center information display.

. Meanwhile, the vehicle 200 described in this specification may be a concept including all of a vehicle having an engine as a power source, a hybrid vehicle having an engine and an electric motor as a power source, and an electric vehicle having an electric motor as a power source.

. FIGS. 2A to 2C are diagrams illustrating various architectures of a vehicle communication gateway according to an embodiment of the present disclosure.

. First, FIG. 2A is a diagram illustrating a first architecture of a vehicle communication gateway according to an embodiment of the present disclosure.

. Referring to the drawing, the first architecture 300a may correspond to a zone-based architecture.

. Accordingly, vehicle internal sensor devices and processors may be mounted in each of a plurality of zones Z1 to Z4, and a signal processing device 170a including a vehicle communication gateway GWDa may be disposed at the center of the plurality of zones Z1 to Z4.

. Meanwhile, the signal processing device 170a may further include an autonomous driving control module ACC, a cockpit control module CPG, etc., in addition to the vehicle communication gateway GWDa.

. The vehicle communication gateway GWDa in the signal processing device 170a may be a High Performance Computing (HPC) gateway.

. That is, as an integrated HPC gateway, the signal processing device 170a of FIG. 2A may exchange data with an external communication module (not shown) or processors (not shown) in the plurality of zones Z1 to Z4.

. FIG. 2B is a diagram illustrating a second architecture of a vehicle communication gateway according to an embodiment of the present disclosure.

. Referring to the figure, a second architecture 300b may correspond to a domain integrated architecture.

. Accordingly, a body chassis control module (BSG), a power control module (PTG), an ADAS control module (ADG), and a cockpit control module (CPG) are connected in parallel to a gateway GWDb, and a plurality of processors ECU may be electrically connected to the respective modules BSG, PTG, ADG, and CPG.

. Meanwhile, the respective processors ECU may be connected to the gateway GWDb while being integrated therein.

. Meanwhile, the signal processing device 170 including the gateway GWDb of FIG. 2B may function as a domain integrated signal processing device.

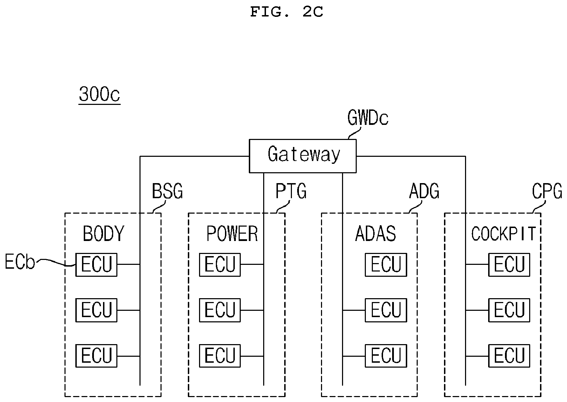

. FIG. 2C is a diagram illustrating a third architecture of a vehicle communication gateway according to an embodiment of the present disclosure.

. Referring to the figure, a third architecture 300c may correspond to a distributed architecture.

. Accordingly, the body chassis control module (BSG), the power control module (PTG), the ADAS control module (ADG), and the cockpit control module (CPG) are connected in parallel to a gateway GWDc, and particularly a plurality of processors ECU in the respective control modules may be electrically connected in parallel to the gateway GWDc.

. In comparison with FIG. 2B, the third architecture is different in that the respective processors ECU are connected directly to the gateway GWDc without being connected to another module.

. Meanwhile, the signal processing device 170 including the gateway GWDc of FIG. 2C functions as a distributed signal processing device.

. FIG. 3 is an exemplary internal block diagram of a signal processing device of FIG. 2A.

. Referring to the figure, the signal processing device 170 according to an embodiment of the present disclosure includes: a first processor 732a which, based on a first communication scheme, is configured to receive a first message including a vehicle internal sensor signal and perform signal processing on the received first message; and a second processor 732b which, based a second communication scheme, is configured to receive a second message including a communication message received from an external source and perform signal processing on the received second message.

. In this case, the second communication scheme may have a faster communication speed or a wider bandwidth than the first communication scheme.

. For example, the second communication scheme may be Ethernet communication, and the first communication scheme may be CAN communication. Accordingly, the first message may be a CAN message, and the second message may be an Ethernet message.

. Meanwhile, the signal processing device 170 according to an embodiment of the present disclosure further includes: a first memory 320 having an IPC channel; and a second memory 330 storing sensor data including vehicle speed data.

. For example, the first memory 320 may be a Static RAM (SRAM), and the second memory 330 may be a DDR memory. Particularly, the second memory 330 may be a Double data rate synchronous dynamic random access memory (DDR SDRAM).

. Meanwhile, the signal processing device 170 according to an embodiment of the present disclosure includes a shared memory 508 that operates for transmitting the first message or the second message between the first processor 732a and the second processor 732b.

. As described above, by performing inter-processor communication using the shared memory 508 during the communication between the first processor 732a and the second processor 732b, latency may be reduced and high-speed data transmission may be performed during inter-processor communication.

. Meanwhile, it is desired that the shared memory 508 is provided in the first memory 320. Accordingly, latency may be reduced and high-speed data transmission may be performed during inter-processor communication.

. Meanwhile, the first processor 732a may include a plurality of processor cores 317o, 317a, and 317b disposed therein.

. Meanwhile, the first processor 732a may further include an interface 319 for receiving the CAN message from external vehicle sensors.

. For example, a first processor core 317o included in the first processor 732a may be configured to execute a plurality of applications or may be configured to execute a first AUTomotive Open System Architecture (AUTOSAR) 312.

. Particularly, by executing a second AUTOSAR 312, the first processor core 317o may be configured to execute an inter-processor communication (IPC) handler 314.

. Meanwhile, the IPC handler 314 may exchange data with the first memory 320 or may exchange IPC data with an application running on the core 317o.

. Meanwhile, the IPC handler 314 may exchange an interrupt signal with an IPC driver 348 included in the second processor 732b.

. Meanwhile, a second processor core 317a included in the first processor 732a may be configured to execute IDS and may receive CAN data from the second memory 330.

. Meanwhile, a third core 317b included in the first processor 732a may be configured to execute Logging, and may store the CAN data, received through the interface 319, in the second memory 330.

. Meanwhile, the third processor core 317b included in the first processor 732a may be configured to execute an IPC module 318 to exchange IPC data with the first memory 320.

. Meanwhile, the third processor core 317b included in the first processor 732a may transmit an interrupt signal to the IPC driver 348 in the second processor 732b.

. The first memory 320 may exchange the IPC data with the IPC handler 314 or the IPC module 318.

. Meanwhile, the second processor 732b may be configured to execute an application 343, the IPC handler 345, an IPC daemon 346, the IPC driver 348, and the like.

. Meanwhile, the second processor 732b may further execute a service oriented architecture (SOA) adapter 341, a diagnosis server 342, and the second AUTOSAR 347.

. The second AUTOSAR 347 may be an adaptive AUTOSAR, and the first AUTOSAR 312 may be a classic AUTOSAR.

. The IPC daemon 346 may exchange an interrupt signal with the SOA adapter 341, the diagnosis server 342, the IPC handler 345, the IPC driver 348, and the like.

. Meanwhile, the first memory 320 may exchange IPC data with the SOA adapter 341, the diagnosis server 342, the IPC handler 345, and the like.

. Meanwhile, the IPC data described with reference to FIG. 3 may be the CAN message or Ethernet message.

. Meanwhile, the IPC handler 345 may function as a service provider providing data such as diagnosis, firmware, upgrade, system information, etc., based on the second AUTOSAR 347.

. Meanwhile, although not illustrated in FIG. 3, the first processor 732a implements a message router (not shown), and the message router may convert a frame of the first message, such as the CAN message, into a frame format of the second message, such as the Ethernet message, and may transmit the converted message to the second processor 732b.

. Meanwhile, although not illustrated in FIG. 3, the first processor 732a may further implement a CAN driver (not shown) and a CAN interface (not shown).

. For example, the CAN interface (not shown) may be implemented by a total of 16 channels, with eight channels of each of a fourth processor core (not shown) and a fifth processor core (not shown) in the first processor 732a.

. In this case, a first CAN interface (not shown) implemented on the fourth processor core (not shown) may correspond to a first queue (PTb) during inter-processor communication, and a second CAN interface (not shown) implemented on the fifth processor core (not shown) may correspond to a second queue (PTb), having a higher priority than the first queue (PTb), during inter-processor communication.

. FIG. 4A is a diagram illustrating an example of an arrangement of a vehicle display apparatus in a vehicle according to an embodiment of the present disclosure.

. Referring to the figure, a cluster display 180a, an audio video navigation (AVN) display 180b, rear seat entertainment displays 180c and 180d, and a rear-view mirror display (not shown) may be mounted in the vehicle.

. FIG. 4B is a diagram illustrating another example of an arrangement of a vehicle display apparatus in a vehicle according to an embodiment of the present disclosure.

. A vehicle display apparatus 100 according to the embodiment of the present disclosure may include a plurality of displays 180a and 180b and a signal processing device 170 configured to perform signal processing in order to display images and information on the plurality of displays 180a and 180b.

. The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

. The signal processing device 170 may have a processor 175 provided therein, and first to third virtual machines (not shown) may be executed by a hypervisor 505 in the processor 175.

. The second virtual machine (not shown) may be operated for the first display 180a, and the third virtual machine (not shown) may be operated for the second display 180b.

. Meanwhile, the first virtual machine (not shown) in the processor 175 may be configured to set a shared memory 508 based on the hypervisor 505 for transmission of the same data to the second virtual machine (not shown) and the third virtual machine (not shown). Consequently, the first display 180a and the second display 180b in the vehicle may display the same information or the same images in a synchronized state.

. Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle may divide and process data.

. Meanwhile, the first virtual machine (not shown) in the processor 175 may receive and process wheel speed sensor data of the vehicle, and may transmit the processed wheel speed sensor data to at least one of the second virtual machine (not shown) or the third virtual machine (not shown). Consequently, at least one virtual machine may share the wheel speed sensor data of the vehicle.

. Meanwhile, the vehicle display apparatus 100 according to the embodiment of the present disclosure may further include a rear seat entertainment (RSE) display 180c configured to display driving state information, simple navigation information, various kinds of entertainment information, or an image.

. The signal processing device 170 may further execute a fourth virtual machine (not shown), in addition to the first to third virtual machines (not shown), on the hypervisor 505 in the processor 175 to control the RSE display 180c.

. Consequently, it is possible to control various displays 180a to 180c using a single signal processing device 170.

. Meanwhile, some of the plurality of displays 180a to 180c may be operated based on a Linux Operating System (OS), and others may be operated based on a Web Operating System (OS).

. The signal processing device 170 according to the embodiment of the present disclosure may be configured to display the same information or the same images in a synchronized state on the displays 180a to 180c to be operated under various operating systems.

. Meanwhile, FIG. 4B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

. FIG. 5 is an exemplary internal block diagram of the vehicle display apparatus of FIG. 4B.

. Referring to the figure, the vehicle display apparatus 100 according to the embodiment of the present disclosure may include an input device 110, a transceiver 120 for communication with an external device, a plurality of communication modules EMa to EMd for internal communication, a memory 140, a signal processing device 170, a plurality of displays 180a to 180c, an audio output device 185, and a power supply 190.

. The plurality of communication modules EMa to EMd may be disposed in a plurality of zones Z1 to Z4, respectively, in FIG. 2A.

. Meanwhile, the signal processing device 170 may be provided therein with an Ethernet switch 736b for data communication with the respective communication modules EM1 to EM4.

. The respective communication modules EM1 to EM4 may perform data communication with the plurality of sensor devices SN or the ECU 770.

. Meanwhile, each of the plurality of sensor devices SN may include a camera 195, a lidar sensor 196, a radar sensor 197, or a position sensor 198.

. The input device 110 may include a physical button or pad for button input or touch input.

. Meanwhile, the input device 110 may include a microphone (not shown) for user voice input.

. The transceiver 120 may wirelessly exchange data with a mobile terminal 800 or a server 900.

. In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

. The transceiver 120 may receive weather information and road traffic state information, such as Transport Protocol Experts Group (TPEG) information, from a mobile terminal 800 or a server 900. To this end, the transceiver 120 may include a mobile communication module (not shown) .

. The plurality of communication modules EM1 to EM4 may receive sensor information from an electronic control unit (ECU) 770 or a sensor device SN, and may transmit the received information to the signal processing device 170.

. Here, the sensor information may include at least one of vehicle direction information, vehicle position information (global positioning system (GPS) information), vehicle angle information, vehicle speed information, vehicle acceleration information, vehicle inclination information, vehicle forward/backward movement information, battery information, fuel information, tire information, vehicle lamp information, vehicle internal temperature information, and vehicle internal humidity information.

. The sensor information may be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

. Meanwhile, the position module may include a GPS module configured to receive GPS information or a position sensor 198.

. Meanwhile, at least one of the plurality of communication modules EM1 to EM4 may transmit position information data sensed by the GPS module or the position sensor 198 to the signal processing device 170.

. Meanwhile, at least one of the plurality of communication modules EM1 to EM4 may receive front image data of the vehicle, side-of-vehicle image data, rear image data of the vehicle, and obstacle-around-vehicle distance information from the camera 195, the lidar sensor 196, or the radar sensor 197, and may transmit the received information to the signal processing device 170.

. The memory 140 may store various data necessary for overall operation of the vehicle display apparatus 100, such as programs for processing or control of the signal processing device 170.

. For example, the memory 140 may store data about the hypervisor and first to third virtual machines executed by the hypervisor in the processor 175.

. The audio output device 185 may convert an electrical signal from the signal processing device 170 into an audio signal, and may output the audio signal. To this end, the audio output device 185 may include a speaker.

. The power supply 190 may supply power necessary to operate components under control of the signal processing device 170. In particular, the power supply 190 may receive power from a battery in the vehicle.

. The signal processing device 170 may control the overall operation of each device in the vehicle display apparatus 100 or the vehicle 200.

. For example, the signal processing device 170 may include a processor 175 configured to perform signal processing for the vehicle displays 180a and 180b.

. The processor 175 may be configured to execute the first to third virtual machines (not shown) on the hypervisor 505 (not shown) in the processor 175.

. Among the first to third virtual machines (not shown) (see FIG. 10), the first virtual machine (not shown) may be called a server virtual machine, and the second and third virtual machines (not shown) and (not shown) may be called guest virtual machines.

. For example, the first virtual machine (not shown) in the processor 175 may receive sensor data from the plurality of sensor devices, such as vehicle sensor data, position information data, camera image data, audio data, or touch input data, and may process and output the received sensor data.

. As described above, the first virtual machine (not shown) may process most of the data, whereby 1:N data sharing may be achieved.

. In another example, the first virtual machine (not shown) may directly receive and process CAN data, Ethernet data, audio data, radio data, USB data, and wireless communication data for the second and third virtual machines (not shown).

. Further, the first virtual machine (not shown) may transmit the processed data to the second and third virtual machines 530 and 540.

. Accordingly, only the first virtual machine (not shown), among the first to third virtual machines (not shown), may receive sensor data from the plurality of sensor devices, communication data, or external input data, and may perform signal processing, whereby load in signal processing by the other virtual machines may be reduced and 1:N data communication may be achieved, and therefore synchronization at the time of data sharing may be achieved.

. Meanwhile, the first virtual machine (not shown) may be configured to write data in the shared memory 508, whereby the second virtual machine (not shown) and the third virtual machine (not shown) share the same data.

. For example, the first virtual machine (not shown) may be configured to write vehicle sensor data, the position information data, the camera image data, or the touch input data in the shared memory 508, whereby the second virtual machine (not shown) and the third virtual machine (not shown) share the same data. Consequently, 1:N data sharing may be achieved.

. Eventually, the first virtual machine (not shown) may process most of the data, whereby 1:N data sharing may be achieved.

. Meanwhile, the first virtual machine (not shown) in the processor 175 may be configured to set the shared memory 508 based on the hypervisor 505 in order to transmit the same data to the second virtual machine (not shown) and the third virtual machine (not shown).

. Meanwhile, the signal processing device 170 may process various signals, such as an audio signal, an image signal, and a data signal. To this end, the signal processing device 170 may be implemented in the form of a system on chip (SOC).

. Meanwhile, the signal processing device 170 included in the display apparatus 100 of FIG. 5 may be the same as the signal processing device 170 of a vehicle communication device 700 of FIG. 7 and the like.

. FIG. 6 is an internal block diagram illustrating an example of a vehicle communication device.

. Referring to the drawing, a vehicle communication device 600x associated with the present disclosure may include a first communication gateway 630a and a second communication gateway 630b.

. The first communication gateway 630a may include a body module 610, a chassis module 614, a CAN diagnostic tester 616, a CAN transceiver 636a for exchanging a CAN signal by CAN communication with at least one CAN ECU 618 and the like, and a first processor 632a for performing signal processing on the CAN signal received from the CAN transceiver 636a.

. Meanwhile, the first processor 632a may include an IPC manager 634a for inter-processor communication with a second processor 632b in the second communication gateway 630b.

. The second communication gateway 630b may include a telematics control module 620, a head module 622, an Ethernet diagnostic tester 624, an Ethernet switch 636b for exchanging an Ethernet message by Ethernet communication with at least one Ethernet ECU 626, and a second processor 632b for performing signal processing on the Ethernet message received from the Ethernet switch 636b.

. Meanwhile, the second processor 632b may include an IPC manager 634b for inter-processor communication with the first processor 632a in the first communication gateway 630a.

. Meanwhile, the IPC manager 634a in the first processor 632a and the IPC manager 643b in the second processor 632b may perform inter-processor communication based on the Ethernet communication.

. While the inter-processor communication is suitable for high-speed transmission of large data using a high bandwidth based on Ethernet, the communication method has a drawback in that latency occurs in communication between a protocol stack and a Physical Layer (PHY).

. Accordingly, the present disclosure provides a method of reducing latency and performing high-speed data transmission during inter-processor communication, which will be described below with reference to FIG. 7 and subsequent figures.

. FIG. 7 is an internal block diagram illustrating another example of a vehicle communication device.

. Referring to the drawing, the vehicle communication device 700 according to an embodiment may include: a first processor 732a configured to receive a first message, including a vehicle internal sensor signal, based on a first communication scheme with a first communication gateway 730a and a second communication gateway 730b, and perform signal processing on the received first message; a second processor 732b configured to receive a second message, including a communication message received from an external source, based a second communication scheme, and perform signal processing on the received second message; and a shared memory 508 configured to operate to transmit the first message or the second message between the first processor 732a and the second processor 732b.

. In comparison with the communication device 600x of FIG. 6, by using the shared memory 508 for inter-processor communication (IPC) between the first processor 732a and the second processor 732b, it is possible to reduce latency and perform high-speed data transmission during the inter-processor communication.

. In addition, in comparison with the communication device 600x of FIG. 6, by providing the first processor 732a, the second processor 732b, and the shared memory 508 in one signal processing device 170 implemented as a single chip, it is possible to reduce latency and perform high-speed data transmission during the inter-processor communication.

. Meanwhile, it is desirable that the second communication scheme has a faster communication speed or a wider bandwidth than the first communication scheme.

. For example, the second communication scheme may be Ethernet communication, and the first communication scheme may be CAN communication. Accordingly, the first message may be a CAN message, and the second message may be an Ethernet message.

. Meanwhile, the signal processing device 170 and the vehicle communication device 700 including the same according to an embodiment of the present disclosure may further include: a transceiver 736a which, based on the first communication scheme, is configured to receive a first message including a vehicle internal sensor signal and transmit the first message to the first processor 732a; and the switch 736b which, based on the second communication scheme, is configured to receive a second message including a communication message received from an external source, and transmit the second message to the second processor 732b. Accordingly, the first and second messages may be transmitted stably to the first processor 732a and the second processor 732b.

. The first processor 732a or the transceiver 736a may exchange a CAN signal by CAN communication with the body module 610, the chassis module 614, the CAN diagnostic tester 616, at least one CAN ECU 618, and the like.

. Meanwhile, the first processor 732a may include a first manager 734a for inter-processor communication (IPC) with the second processor 732b. The first manager 734a may be referred to as an IPC manager.

. Meanwhile, the first manager 734a may include a first cache 735a.

. Meanwhile, the second processor 732b or the switch 736b may exchange an Ethernet message by Ethernet communication with the telematics control module 620, the head module 622, the Ethernet diagnostic tester 624, at least one Ethernet ECU 626, and the like. The switch 736b may be referred to as an Ethernet switch.

. Meanwhile, the second processor 732b may include a second manager 734b for inter-processor communication (IPC) with the first processor 732a. The second manager 734a may be referred to as an IPC manager.

. Meanwhile, the second processor 732b may include the second manager 734b including a second cache 735b and a timer 737.

. Meanwhile, the second processor 723b may receive a request for periodic subscription to the first message from the Ethernet processor or the Ethernet ECU 626.

. Accordingly, the second processor 732b may transmit the request for periodic subscription to the first message to the first processor 732a.

. Particularly, the second processor 732b may transmit the subscription request through the inter-processor communication (IPC). Accordingly, the inter-processor communication may be performed.

. Meanwhile, the first processor 732a may periodically receive CAN data from the at least one CAN ECU 618 and the like.

. For example, the first processor 732a periodically receives the first message, predefined in a CAN database (DB), from the at least one CAN ECU 618 and the like.

. For example, the periodic first message, which is sensor information, may include vehicle speed information, position information, or the like.

. In another example, the periodic first message may include at least one of vehicle direction information, vehicle position information (GPS information), vehicle angle information, vehicle acceleration information, vehicle tilt information, vehicle forward/backward movement information, battery information, fuel information, tire information, vehicle lamp information, in-vehicle temperature information, and in-vehicle humidity information.

. Meanwhile, the first processor 732a may select a first message, which is requested to be subscribed, among the periodically received CAN data or first messages, and may transmit the first message, which is requested to be subscribed, to the second processor 732b.

. Meanwhile, the first processor 732a may separately process a first message, which is not requested to be subscribed, among the periodically received CAN data or first messages, according to an internal operation without transmitting the message to the second processor 732b.

. Specifically, upon receiving the first message which is requested to be subscribed, the first processor 732a may store the first message in the first cache 735a or may manage the first message. Upon receiving the first message, the first processor 732a may compare the first message with a value stored in the first cache 735a, and if a difference therebetween is greater than or equal to a predetermined value, the first processor 732a may transmit the first message to the second processor 732b through the inter-processor communication.

. Meanwhile, upon receiving the first message which is requested to be subscribed, the first processor 732a may store the first message in the first cache 735a or may manage the first message. Upon receiving the first message, the first processor 732a may compare the first message with a value stored in the first cache 735a, and if a difference therebetween is greater than or equal to a predetermined value, the first processor 732a may transmit the first message to the second processor 732b through the inter-processor communication using the shared memory 508.

. For example, upon receiving the first message, the first processor 732a may compare the message with a value stored in the first cache 735a, and if the two are not the same, the first processor 732a may transmit the first message to the second processor 732b through the inter-processor communication using the shared memory 508.

. In another example, upon receiving the first message, the first processor 732a may compare the message with the value stored in the first cache 735a, and if the two are the same, the first processor 732a may not transmit the first message to the second processor 732b.

. Accordingly, by minimizing cache occupancy or buffer occupancy of the same data, it is possible to reduce latency and perform high-speed data transmission during inter-processor communication.

. Meanwhile, upon first receiving the first message, the second processor 732b may store the first message in the second cache 735b, and upon subsequently receiving the first message, the second processor 732b may update the second cache 735b. Accordingly, it is possible to reduce latency and perform high-speed data transmission during inter-processor communication.

. Meanwhile, upon receiving the first message, the second processor 732b may generate a thread of the timer 737, and each time the thread terminates, the second processor 732b may transmit a value in the second cache 735b to the Ethernet processor or the Ethernet ECU 626. Accordingly, it is possible to reduce latency and perform high-speed data transmission during inter-processor communication.

. Meanwhile, during a period in which the inter-processor communication is not performed such that the first message is not received, the second processor 732b may transmit a value in the second cache 735b to the Ethernet processor or the Ethernet ECU 626.

. That is, if a value of the subscribed first message is constant during the period, the cache value stored in the second processor 732b may be sent to the Ethernet processor 626 without the inter-processor communication.

. Accordingly, it is possible to minimize the usage of the IPC buffer in the shared memory 508 which operates in FIFO mode. In addition, by maintaining the usage of the IPC buffer to a minimum, data including the first message, the second message, or the like may be transmitted rapidly through the inter-processor communication.

. Meanwhile, during a period in which the inter-processor communication is performed such that the first message is received, the second processor 732b may transmit a value in the updated second cache 735b to the Ethernet processor or the Ethernet ECU 626. Accordingly, it is possible to reduce latency and perform high-speed data transmission during inter-processor communication.

. Meanwhile, during the inter-processor communication, the shared memory 508 may transmit data between the first processor 732a and the second processor 732b through a first queue PTb and a second queue PTa having a higher priority than the first queue PTb.

. Particularly, even when the number of events for the inter-processor communication increases, the shared memory 508 may transmit only the data, corresponding to events allocated for the second queue PTa, through the second queue PTa. Accordingly, real-time transmission of a high priority event may be ensured during the inter-processor communication.

. For example, the first queue PTb may be a normal priority queue, and the second queue PTa may be a high priority queue.

. Specifically, the shared memory 508 may transmit most of the data through the first queue PTb during the inter-processor communication.

. However, the share memory 508 may transmit only time sensitive-critical data without delay through the second queue PTa which is a higher priority queue than the first queue PTb.

. For example, the time sensitive-critical data may be speed data, position information data, or the like.

. That is, the shared memory 508 may transmit the speed data or position information data between the first processor 732a or the second processor 732b through the second queue PTa. Accordingly, real-time transmission of the speed data or the position information data having a high priority may be ensured during the inter-processor communication.

. Meanwhile, the first processor 732a or the second processor 732b may manage a list of applications capable of using the second queue PTa.

. For example, the second processor 732b may include an application for displaying speed information, as an application capable of using the second queue PTa, in a second list 738b and may manage the list.

. Meanwhile, for real-time transmission through the second queue PTa, a minimum operation is preferred so that there may be no redundant scenarios or applications.

. As described above, by transmitting the time sensitive-critical data in real time using the second queue PTa, real-time transmission of a high priority event may be ensured during the inter-processor communication.

. Meanwhile, during the inter-processor communication, the shared memory 508 may reduce latency and may perform high-speed data transmission by assigning at least two queues.

. In the drawing, an example is illustrated in which the first manager 734a in the first processor 732a manages a first list 738a which is a whitelist, and the second manager 734b in the second processor 732b manages a second list 738b which is a whitelist, thereby ensuring the real-time transmission of a high-priority event during the inter-processor communication.

. FIGS. 8A to 8D are diagrams illustrating various examples of a vehicle communication device according to an embodiment of the present disclosure.

. FIG. 8A is a diagram illustrating an example of a vehicle communication device according to an embodiment of the present disclosure.

. Referring to the figure, a vehicle communication device 800a according to an embodiment of the present disclosure includes signal processing devices 170a1 and 170a2 and a plurality of zonal signal processing devices 170Z1 to 170Z4.

. Meanwhile, two signal processing devices 170a1 and 170a2 are illustrated in the figure, which are provided for backup and the like, and one signal processing device is also possible.

. Meanwhile, the signal processing devices 170a1 and 170a2 may be referred to as a High Performance Computing (HPC) signal processing devices.

. The plurality of zonal signal processing devices 170Z1 to 170Z4 may be located in the respective zones Z1 to Z4 and may transmit sensor data to the signal processing devices 170a1 and 170a2.

. The signal processing devices 170a1 and 170a2 may receive data by wire from the plurality of zonal signal processing devices 170Z1 to 170Z4 or a communication device 120.

. In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 may exchange data with the server 400 based on wireless communication, and the signal processing devices 170a1 and 170a2 may exchange data with the communication device 120 based on wired communication.

. Meanwhile, the data received by the signal processing devices 170a1 and 170a2 may include camera data or sensor data.

. For example, the vehicle internal sensor data may include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data, and external vehicle lidar data.

. Meanwhile, the camera data may include external vehicle camera data and vehicle internal camera data.

. Meanwhile, the signal processing devices 170a1 and 170a2 may be configured to execute a plurality of virtual machines 820, 830, and 840 based on safety levels.

. In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

. The first virtual machine 820 may be a virtual machine corresponding to quality management (QM) which is the lowest risk level of the ASIL with no mandatory need.

. The first virtual machine 820 may be configured to execute an operating system 822, a container runtime 824 on the operating system 822, and containers 827 and 829 on the container runtime 824.

. The second virtual machine 830 may be a virtual machine corresponding to ASIL A or ASIL B with the combination of severity, exposure, and controllability values being 7 or 8.

. The second virtual machine 830 may be configured to execute an operating system 832, a container runtime 834 on the operating system 832, and containers 837 and 839 on the container runtime 834.

. The third virtual machine 840 may be a virtual machine corresponding to ASIL C or ASIL D with the combination of severity, exposure, and controllability values being 9 or 10.

. Meanwhile, ASIL D may correspond to a grade that requires the highest level of safety.

. The third virtual machine 840 may be configured to execute a safety operating system 842 and an application 845 on the operating system 842.

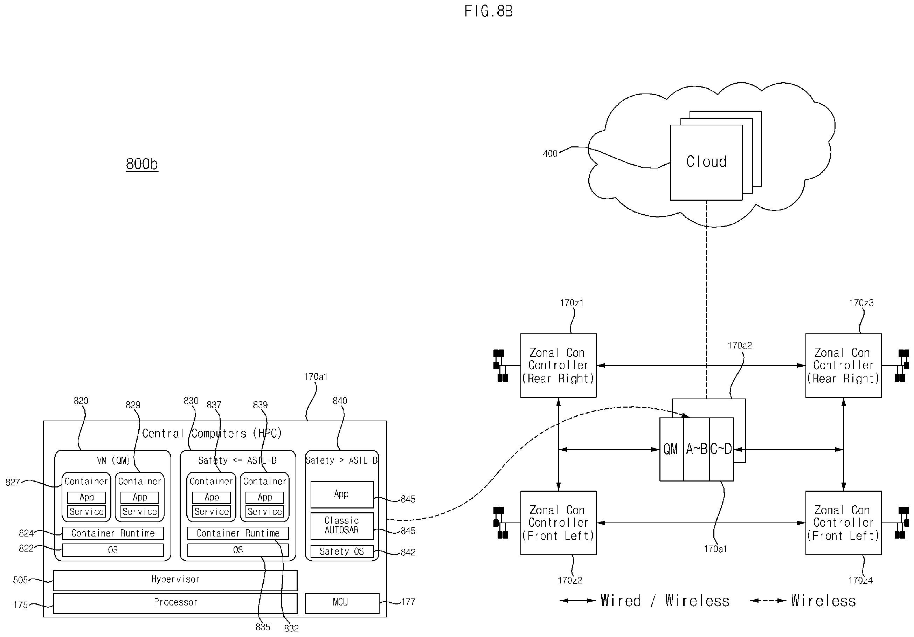

. Meanwhile, unlike the drawing, the third virtual machine 840 may also be executed by a separate core, rather than by the processor 175, which will be described below with reference to FIG. 8B.

. Meanwhile, the processor 175 that executes the first to third virtual machines 820 to 840 may correspond to the second processor 732b of FIG. 7.

. FIG. 8B is a diagram illustrating another example of a vehicle communication device according to an embodiment of the present disclosure.

. Referring to the figure, a vehicle communication device 800b according to an embodiment of the present disclosure includes the signal processing devices 170a1 and 170a2 and the plurality of zonal signal processing devices 170Z1 to 170Z4.

. The vehicle communication device 800b of FIG. 8B is similar to the vehicle communication device 800a of FIG. 8A, with a difference being that the signal processing device 170a1 of FIG. 8B is partially different from the signal processing device 170a1 of FIG. 8A.

. The following description will focus on the difference, in which the signal processing device 170a may include a processor 175 and a second processor 177.

. The processor 175 in the signal processing device 170a1 executes the hypervisor 505, and executes the first and second virtual machines 820 and 830 on the hypervisor 505 according to the ASIL.

. The first virtual machine 820 may be configured to execute the operating system 822, the container runtime 824 on the operating system 822, and the containers 827 and 829 on the container runtime 824.

. The second virtual machine 820 may be configured to execute the operating system 832, the container runtime 834 on the operating system 832, and the containers 837 and 839 on the container runtime 834.

. Meanwhile, the second processor 177 in the signal processing device 170a1 may be configured to execute the third virtual machine 840.

. The third virtual machine 840 may be configured to execute the safety operating system 842, an AUTOSAR 846 on the operating system 842, and an application 845 on the AUTOSAR 846. That is, unlike FIG. 8A, the third virtual machine 840 may further execute the AUTOSAR 846 on the operating system 842.

. Meanwhile, unlike the first and second virtual machines 820 and 830, the third virtual machine 840 that requires a high safety level is desirably executed by the second processor 177 that is a different core or a different processor.

. Meanwhile, the processor 175 that executes the first and second virtual machines 820 and 830 may correspond to the second processor 732b of FIG. 7, and the second processor 177 that executes the third virtual machine 840 may correspond to the first processor 732a of FIG. 7.

. Meanwhile, in the signal processing devices 170a1 and 170a2 of FIGS. 8A and 8B, if there is abnormality in the first signal processing device 170a, the second signal processing device 170a may operate which is provided for backup purposes.

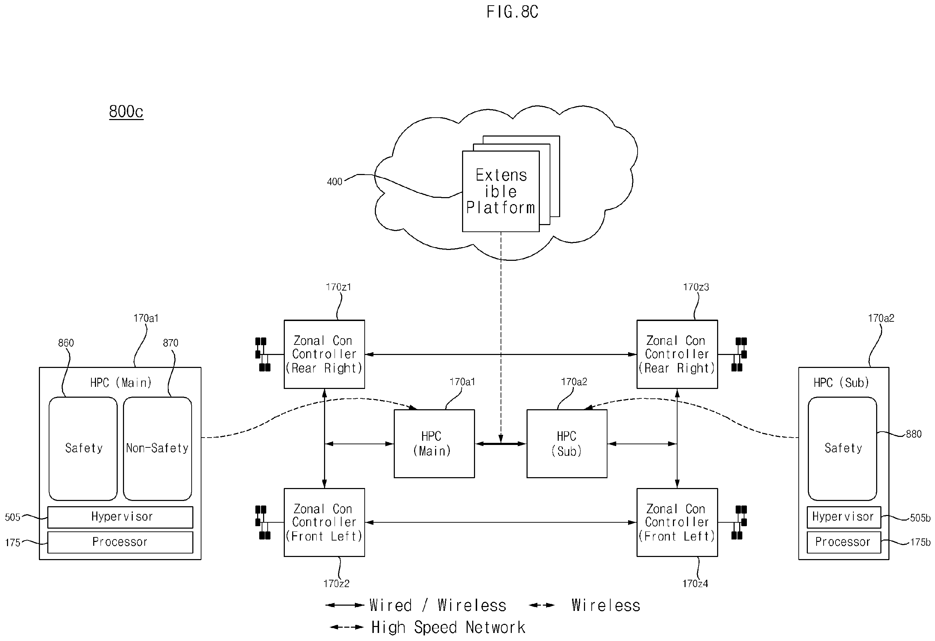

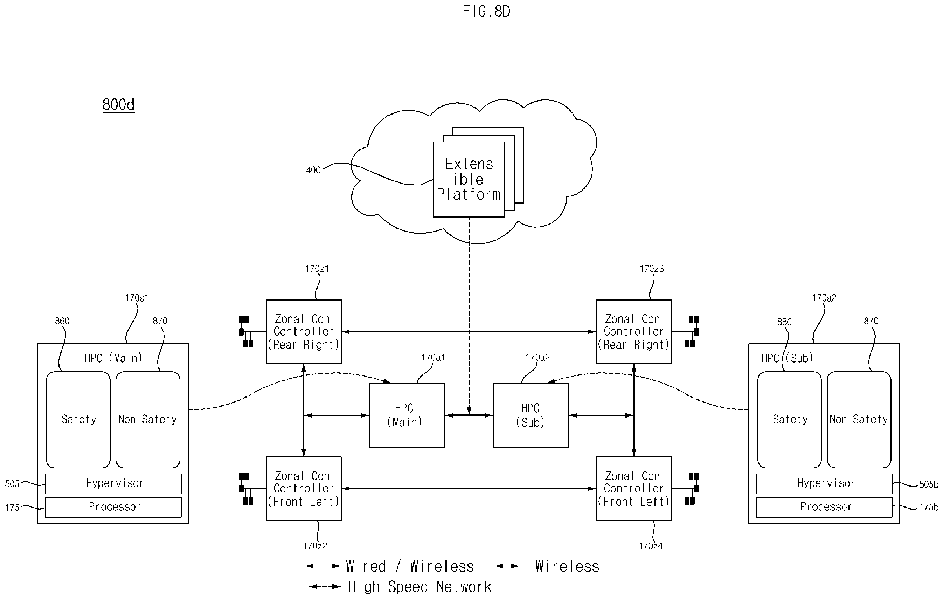

. Unlike the example, the signal processing devices 170a1 and 170a2 may operate at the same time, in which the first signal processing device 170a may operate as a main device, and the second signal processing device 170a2 may operate as a sub device, which will be described below with reference to FIGS. 8C and 8D.

. FIG. 8C is a diagram illustrating yet another example of a vehicle communication device according to an embodiment of the present disclosure.

. Referring to the drawing, a vehicle communication device 800c according to an embodiment of the present disclosure includes the signal processing devices 170a and 170a2 and the plurality of zonal signal processing devices 170Z1 to 170Z4.

. Meanwhile, two signal processing devices 170a1 and 170a2 are illustrated in the figure, which are provided for backup and the like, and one signal processing device is also possible.

. Meanwhile, the signal processing devices 170a1 and 170a2 may be referred to as a High Performance Computing (HPC) signal processing devices.

. The plurality of zonal signal processing devices 170Z1 to 170Z4 may be located in the respective zones Z1 to Z4 and may transmit sensor data to the signal processing devices 170a1 and 170a2.

. The signal processing devices 170a1 and 170a2 may receive data by wire from the plurality of zonal signal processing devices 170Z1 to 170Z4 or a communication device 120.

. In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 may exchange data with the server 400 based on wireless communication, and the signal processing devices 170a1 and 170a2 exchange data with the communication device 120 based on wired communication.

. Meanwhile, the data received by the signal processing devices 170a1 and 170a2 may include camera data or sensor data.

. Meanwhile, the processor 175 in the first signal processing device 170a1 of the signal processing devices 170a1 and 170a2 may be configured to execute the hypervisor 505, and may be configured to execute each of a safety virtual machine 860 and a non-safety virtual machine 870 on the hypervisor 505.

. Meanwhile, the processor 175b in the second signal processing device 170a2 of the signal processing devices 170a1 and 170a2 may be configured to execute the hypervisor 505b, and may be configured to execute only a safety virtual machine 880 on the hypervisor 505.

. In the method, safety and non-safety virtual machines may be processed separately by the first signal processing device 170a1 and the second signal processing device 170a2, thereby improving stability and processing speed.

. Meanwhile, high-speed network communication may be performed between the first signal processing device 170a1 and the second signal processing device 170a2.

. FIG. 8D is a diagram illustrating yet another example of a vehicle communication device according to an embodiment of the present disclosure.

. Referring to the figure, a vehicle communication device 800d according to an embodiment of the present disclosure includes the signal processing devices 170a1 and 170a2 and the plurality of zonal signal processing devices 170Z1 to 170Z4.

. The vehicle communication device 800d of FIG. 8D is similar to the vehicle communication device 800c of FIG. 8C, with a difference being that the second signal processing device 170a2 of FIG. 8D is partially different from the second signal processing device 170a2 of FIG. 8C.

. The processor 175b in the second signal processing device 170a2 of FIG. 8D may be configured to execute the hypervisor 505b, and may be configured to execute each of a safety virtual machine 880 and a non-safety virtual machine 890 on the hypervisor 505.

. That is, unlike FIG. 8C, the processor 175b in the second signal processing device 170a2 further executes the non-safety virtual machine 890.

. In the method, safety and non-safety virtual machines may be processed separately by the first signal processing device 170a1 and the second signal processing device 170a2, thereby improving stability and processing speed.

. FIGS. 9A to 9F are diagrams illustrating various examples of data transmission schemes of a signal processing device of FIGS. 8A to 8D.

. FIG. 9A is a diagram illustrating an example of a data transmission scheme of a signal processing device.

. Referring to the figure, the processor 175 in a signal processing device 170aa receives data by wire through an Ethernet terminal 910 which is a communication terminal, and processes the received data.

. The processor 175 executes a plurality of virtual machines 920 to 940 on the executed hypervisor 505.

. The processor 175 transmits data from the Ethernet terminal 910 to virtual network interfaces 922, 932, and 942 in the respective virtual machines 920 to 940 via a physical driver executed in the hypervisor 505.

. FIG. 9B is a diagram illustrating another example of a data transmission scheme of a signal processing device.

. Referring to the drawing, the processor 175 in a signal processing device 170ab may receive data by wire through a plurality of Ethernet terminals 910 and 910b, and may transmit the data from the Ethernet terminal 910 to the virtual network interfaces 922 and 932 in the first and second virtual machines 920 and 930 via the physical driver 915 executed in the hypervisor 505 and may transmit the data from a second Ethernet terminal 910b to a physical driver 945 in the third virtual machine 940.

. Meanwhile, it is illustrated in the drawing that there are the plurality of Ethernet terminals 910 and 910b, but unlike the example, data from different sources may be received in a time-division manner and the like via a single Ethernet terminal, such that some of the data may be transmitted to the virtual network interfaces 922 and 932 in the first and second virtual machines 920 and 930 via the physical driver 915 executed in the hypervisor 505, and another part of the data may be transmitted to the physical driver 945 in the third virtual machine 940.

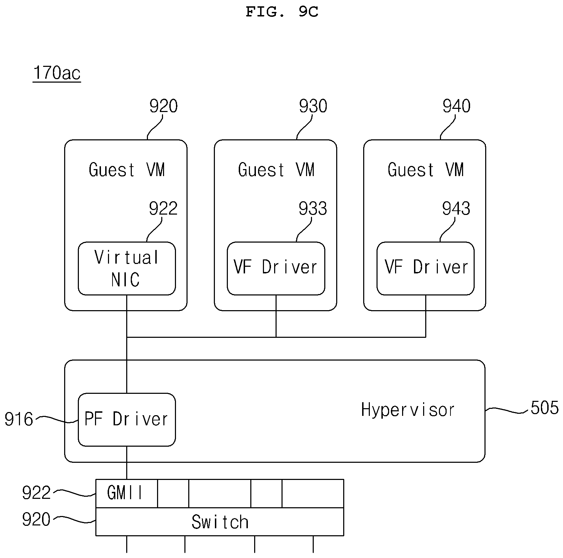

. FIG. 9C is a diagram illustrating yet another example of a data transmission scheme of a signal processing device.

. Referring to the figure, the processor 175 in a signal processing device 170ac receives data by wire through an Ethernet switch 910 which is a communication terminal, and processes the received data.

. The processor 175 executes the plurality of virtual machines 920 to 940 on the executed hypervisor 505.

. The processor 175 transmits data from the Ethernet switch 910 to a virtual network interface 922 or virtual drivers 933 and 943 in the respective virtual machines 920 to 940 via a physical driver 916 executed in the hypervisor 505.

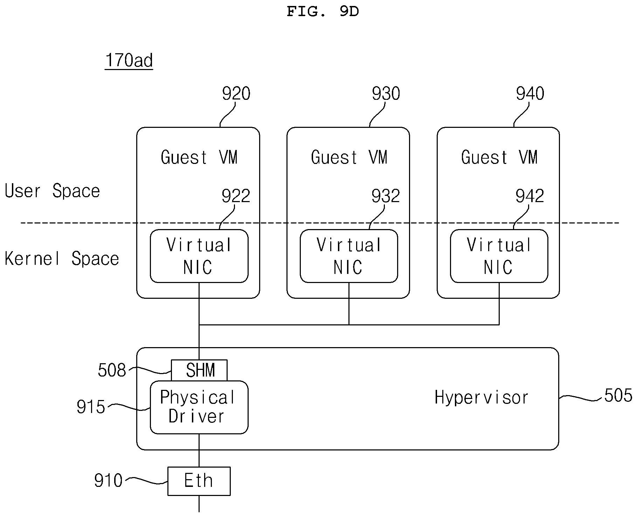

. FIG. 9D is a diagram illustrating further another example of a data transmission scheme of a signal processing device.

. Referring to the figure, the processor 175 in a signal processing device 170ad may receive data by wire through the Ethernet terminal 910, and may transmit data from the Ethernet terminal 910 to the virtual network interfaces 922, 932, and 942 in the first to third virtual machines 920 to 940 via the physical driver 915 executed in the hypervisor 505 and the shared memory 508.

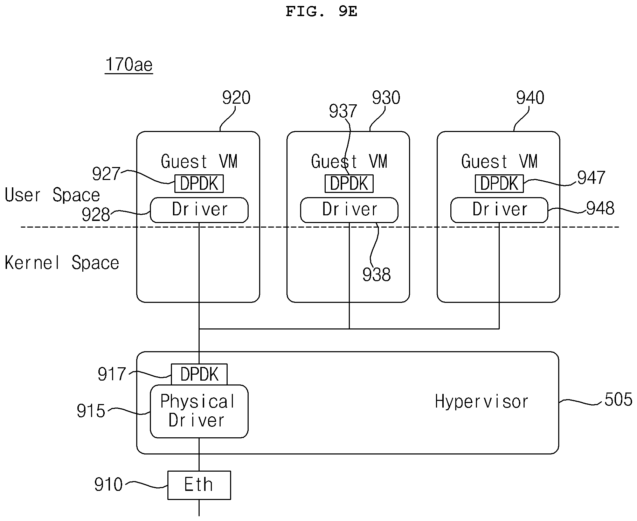

. FIG. 9E is a diagram illustrating yet another example of a data transmission scheme of a signal processing device.

. Referring to the figure, the processor 175 in a signal processing device 170ae may receive data by wire through the Ethernet terminal 910, and may transmit the data from the Ethernet terminal 910 to each of drivers 928, 938, and 948 or Data Plane Development Kits (DPDKs) 927, 937, and 947 in a user space within the first to third virtual machines 920 to 940 via the physical driver 915 executed in the hypervisor 505 and a DPDK 917 which is a packet processing technique.

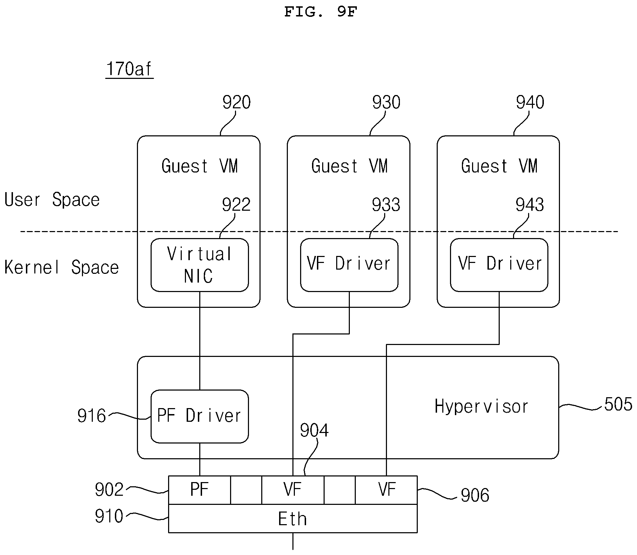

. FIG. 9F is a diagram illustrating yet another example of a data transmission scheme of a signal processing device.

. Referring to the drawing, the processor 175 in a signal processing device 170af may receive data by wire through the Ethernet terminal 910, and may transmit some of the data to the virtual network interface 922 in the first virtual machine 920 through physical switching 916 and the physical driver 915 executed in the hypervisor 505, and may transmit another part of the data to the virtual driver 933 in the second virtual machine 920 through virtual switching, and may transmit yet another part of the data to the virtual driver 943 in the third virtual machine 920 through virtual switching.

. FIG. 10 is a diagram illustrating an example of a vehicle communication system according to an embodiment of the present disclosure.

. Referring to the figure, a vehicle communication system 1000 according to an embodiment of the present disclosure may include a signal processing device 170 in a vehicle, a plurality of zonal signal processing devices 170z, and a signal processing device 170s in an external server 400.

. The plurality of zonal signal processing devices 170z according to an embodiment of the present disclosure may be configured to execute a virtual machine 870, and may be configured to execute an orchestrator client 875 in the virtual machine 870.

. Accordingly, the virtual machine 870 in the plurality of zonal signal processing devices 170z may operate as a worker node WN.

. The signal processing device 170s in the external server 400 according to an embodiment of the present disclosure may be configured to execute a client 803 of the orchestrator.

. Accordingly, the signal processing device 170s in the external server 400 may operate as a worker node WN.

. Meanwhile, the signal processing device 170 according to an embodiment of the present disclosure includes a processor 175 configured to receive data by wire from the plurality of zonal signal processing devices 170z or a communication device 120, and process the received data.

. The processor 175 in the signal processing device 170 according to an embodiment of the present disclosure executes a hypervisor 505 and executes a plurality of virtual machines 810 to 850 on the hypervisor 505.

. Meanwhile, the signal processing device 170 according to an embodiment of the present disclosure may include a second processor 177 configured to execute a sixth virtual machine 860 corresponding to a higher risk classification level (e.g., ASIL D).

. That is, the second processor 177 may be configured to execute a fifth virtual machine 850, corresponding to a higher risk classification level (e.g., ASIL D), separately from the first to fifth virtual machines 810 to 850 executed in the processor 175. Accordingly, data of higher risk classification level may be stably processed.

. Some virtual machine 840 among the plurality of virtual machines 810 to 860 acts as a master node MN of orchestration, and other virtual machines 820, 830, 850, and 860 among the plurality of virtual machines 810 to 860 operate as worker nodes WN of orchestration. Accordingly, a service or application may be efficiently processed. Particularly, the service or application may be rapidly and stably processed.

. That is, a fourth virtual machine 840 among the plurality of virtual machines 810 to 860 acts as the master node MN of orchestration, and second and third virtual machines 820 and 830 and fifth and sixth virtual machines 850 and 860 among the plurality of virtual machines 810 to 860 operate as the worker nodes WN of orchestration.

. Specifically, the fourth virtual machines 840 among the plurality of virtual machines 810 to 860 may be configured to execute an orchestrator 845, and the second and third virtual machines 820 and 830 and the fifth and sixth virtual machines 850 and 860 among the plurality of virtual machines 810 to 860 may be configured to execute orchestrator clients 825, 835, 855, and 865, respectively.

. Meanwhile, the first virtual machine 810 among the plurality of virtual machines 810 to 860 corresponds to a system service virtual machine, the second virtual machine 820 among the plurality of virtual machines 810 to 860 corresponds to a virtual machine with a quality management level (e.g., QM), the third virtual machine 830 among the plurality of virtual machines 810 to 860 corresponds to a virtual machine with a specific safety level (e.g., ASIL B), the fourth virtual machine 840 among the plurality of virtual machines 810 to 860 corresponds to a virtual machine acting as a master node of orchestration, the fifth virtual machine 850 among the plurality of virtual machines 810 to 860 corresponds to a virtual machine with a specific safety level (e.g., ASIL B), and the sixth virtual machine 860 among the plurality of virtual machines 810 to 860 corresponds to a higher risk classification level (e.g., ASIL D). Accordingly, the virtual machines may be executed based on the safety levels.

. Meanwhile, the processor 175 may select at least one of a worker node WN in the plurality of zonal signal processing devices 170z, a worker node WN in a server 400, and a worker node WN in the signal processing device 170, and may be configured to execute a service or application on the selected worker node. Accordingly, the service or application may be efficiently processed.

. Meanwhile, the processor 175 may select at least one of the worker node WN in the plurality of zonal signal processing devices 170z, the worker node WN in the server 400, and the worker node WN in the signal processing device 170, based on a safety level of a service or application to be executed. Accordingly, the service or application may be efficiently processed by the worker node WN.

. Meanwhile, the master node MN may selectively duplicate a service or application, or may perform one of software duplication, hardware duplication, or hybrid duplication, based on a safety level of the service or application, available resources, or a state of the worker node WN. Accordingly, the service or application may be efficiently processed. Particularly, the service or application may be rapidly and stably processed.

. Meanwhile, the master node MN may selectively duplicate a service or application or may perform one of software duplication, hardware duplication, or hybrid duplication, on at least one of the worker node WN in the plurality of zonal signal processing devices 170z, the worker node WN in the server 400, or the worker node WN in the signal processing device 170, based on a safety level of the service or application, available resources, or a state of the worker node WN. Accordingly, the service or application may be duplicated for processing. Particularly, the service or application may be rapidly and stably processed.

. FIGS. 11 to 21F are diagrams referred to in the description of FIG. 10.

. FIG. 11 is a diagram referred to in the description of the master node and the plurality of worker nodes of FIG. 10.

. Referring to FIG. 11, the master node MN may exchange data with a plurality of worker nodes WNa and WNb.

. The master node MN may be configured to execute etcd 1105, Cloud Controller Manager 1107, API Server 1110, Scheduler 1120, and Controller Manager 1125.

. Particularly, the API server 1110 may exchange data with the worker nodes WNa and WNb.

. Meanwhile, the plurality of worker nodes WNa and WNb may respectively execute kubelet 1132 and 1142, kube-proxy 1134 and 1144, and Container Runtime 1136 and 1146.

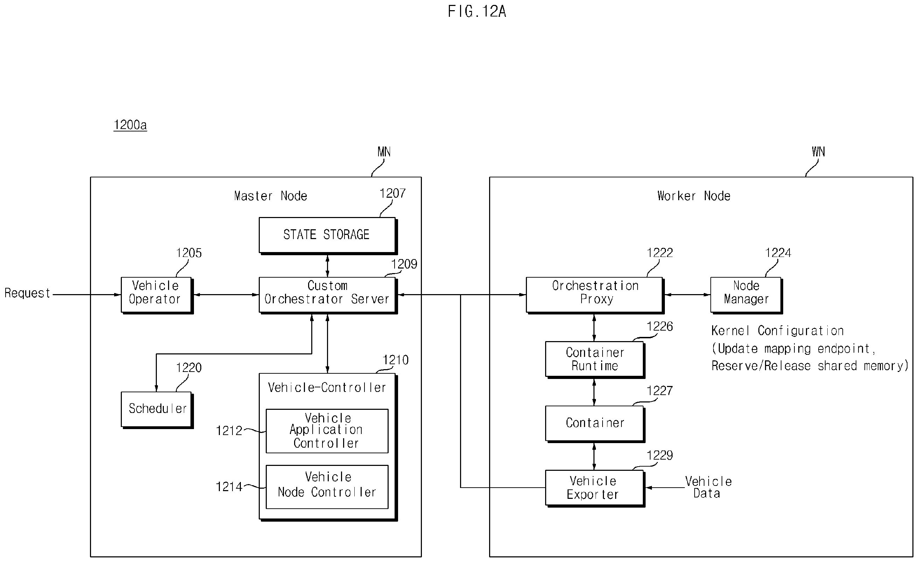

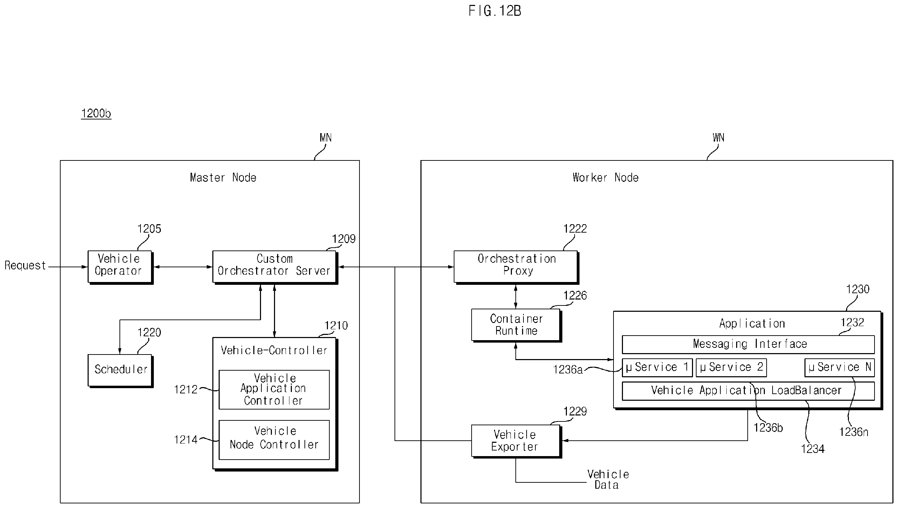

. FIGS. 12A and 12B are diagrams referred to in the description of a master node and a worker node.

. First, FIG. 12A illustrates an example of a master node and a worker node.

. Referring to 12A, a master node MN in a node system 1200a may be configured to execute an operator 1205 configured to receive a request, a state storage 1207 configured to store state information, a scheduler 1220 configured to manage scheduling, an orchestrator server 1209 configured to exchange data with a worker node, an application controller 1212 configured to control an application, and a node controller 1214 configured to control a node.

. Meanwhile, the worker node WN may be configured to execute an exporter 1209 configured to transmit data (e.g., sensor data) to the master node MN, an orchestration proxy 1222 configured to relay data from the master node MN, a container runtime 1226, a container 1227, and a node manager 1224.

. Meanwhile, in order to execute a service or application, the master node MN may transmit a command to at least one worker node WN based on scheduling, and the container 1227 in the worker node WN is configured to receive the command may operate based on the command. Accordingly, the service or application may be efficiently processed by the worker node WN.

. Next, FIG. 12B illustrates another example of a master node and a worker node.

. Referring to FIG. 12B, the master node MN in a node system 1200b is similar to the master node MN of FIG. 12A, but is different in that the state storage 1207 is omitted.

. Meanwhile, there is a difference between FIG. 12A and FIG. 12B in that the container 1227 and the node manager 1224 are omitted from the worker node WN in FIG. 12B, and an application 1230 is executed in FIG. 12B.

. A load balancer 1234, a plurality of microservices 1236a,1236n, ..., and 1236n, and a messaging interface 1232 may be executed in the application 1230.

. Meanwhile, when it is required to duplicate a service or application, the master node MN may perform any one of software duplication, hardware duplication, or hybrid duplication depending on the service or application. Accordingly, the service or application may be duplicated for processing. As a result, the service or application may be rapidly and stably processed.

. Meanwhile, the master node MN may selectively duplicate a service or application or may perform one of software duplication, hardware duplication, or hybrid duplication, based on a safety level of the service or application, available resources, or a state of the worker node WN. Accordingly, the service or application may be duplicated for processing. As a result, the service or application may be rapidly and stably processed.

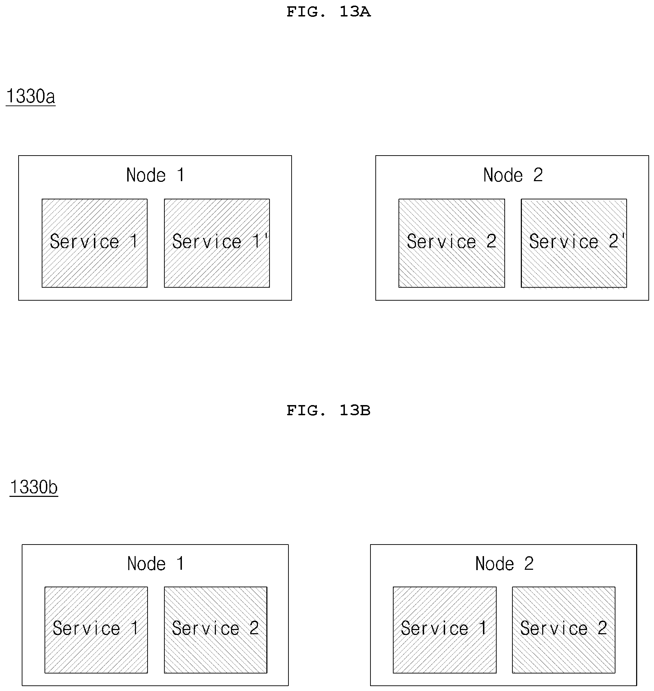

. FIG. 13A is a diagram illustrating an example of software duplication.

. Referring to FIG. 13A, service 1 and service 1' are located at node 1, and service 2 and service 2' are located at node 2.

. As illustrated herein, the same or similar services are located at the same node, such that software duplication may be performed. The software duplication method may be simply implemented regardless of a physical node.

. FIG. 13B is a diagram illustrating an example of hardware duplication.

. Referring to FIG. 13B, service 1 and service 2 are located at node 1, and service 1 and service 2 are located at node 2.

. As illustrated herein, different services (service 1 and service 2) are located at the same node, and service 1 and service 2 are located at each of a plurality of nodes, such that hardware duplication may be performed, thereby ensuring stability during duplication.

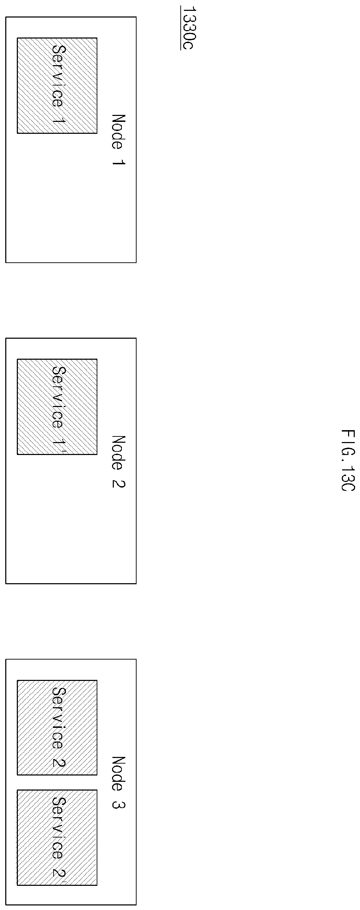

. FIG. 13C is a diagram illustrating an example of hybrid duplication.

. Referring to FIG. 13C, service 1 is located at node 1, service 1' is located at node 2, service 2 and service 2' are located at node 3.

. As illustrated herein, the same or similar services are located at node 3 which is the same node, such that software duplication may be performed, and service 1 and service 1' are located at node 1 and node 2 which are different nodes, such that physical duplication of hardware may be performed. Accordingly, stability during hybrid duplication may be ensured.

. For example, hardware duplication of FIG. 13C may be applied to services requiring a high level of stability, and software duplication may be applied to services requiring high performance.

. Meanwhile, it is illustrated that the hybrid duplication of FIG. 13C uses a greater number of nodes than the software duplication of FIG. 13A or the hardware duplication of FIG. 13B, but the hybrid duplication is not limited thereto, and various other examples are also possible.

. Meanwhile, unlike FIG. 13C, in another example of hybrid duplication, service 1 runs on node 1 and service 1 runs on node 2, and service 1' runs on node 2. In this case, the number of nodes used herein is two, which is the same number as FIG. 13A or FIG. 13B.

. In another example of hybrid duplication, three services run, and operation at the service level or above may be performed using service 1' in node 2 in which software is duplicated, and operation at the system level or above may be performed using service 1 in node 2 in which hardware is duplicated.

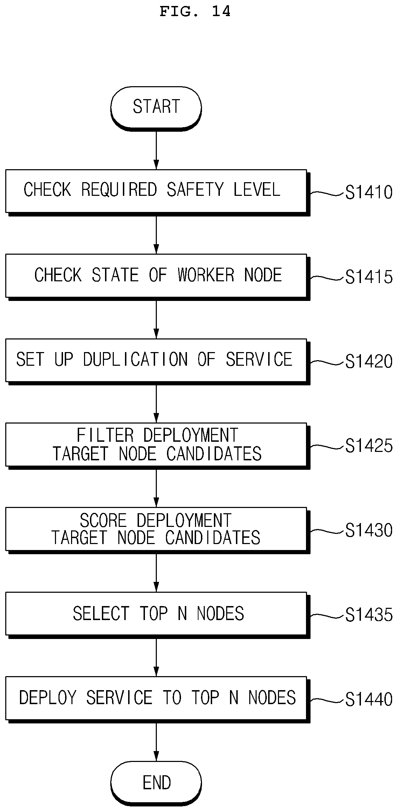

. FIG. 14 is a flowchart illustrating an example of operating a master node.

. Referring to FIG. 14, the master node MN executed in the processor 175 may check a required safety level for executing a service or application (S1410).

. Then, the master node MN executed in the processor 175 may check available resources or a state of the worker node WN (S1415).

. Then, the master node MN executed in the processor 175 may set up duplication of a service or application based on a safety level of the service or application, available resources, or the state of the worker node WN (S1420).

. For example, the master node MN executed in the processor 175 may select any one of software duplication, hardware duplication, and hybrid duplication of FIGS. 13A to 13C or may not perform duplication, based on the safety level of the service or application, available resources, or the state of the worker node WN.

. Meanwhile, after selecting duplication, the master node MN executed in the processor 175 may filter target node candidates (S1425), may score the target node candidates (S1430), and may select top N worker nodes (S1435) based on the scores.

. For example, when scoring the target node candidates, the master node MN executed in the processor 175 may score each worker node by setting a score of a safety level to 3 points, a score of a device to 2 points, and a score of performance to 1 point.

. In this case, each worker node may be the worker node WN in the plurality of zonal signal processing devices 170z, the worker node WN in the server 400, or the worker node WN in the signal processing device 170.

. Meanwhile, the master node MN executed in the processor 175 may select, as top N worker nodes, a plurality of worker nodes WN in the signal processing device 170, or the worker node in the signal processing device 170 and the worker node WN in the zonal signal processing device 170z, or the worker nodes WN in the plurality of zonal signal processing devices 170z, or the worker node WN in the zonal signal processing device 170z and the worker node in the server 400, or a plurality of worker nodes in the server 400.

. Further, the master node MN executed in the processor 175 transmits data for executing a service or application to the selected worker node (S1440). Accordingly, the service or application may be efficiently processed by the worker node WN.

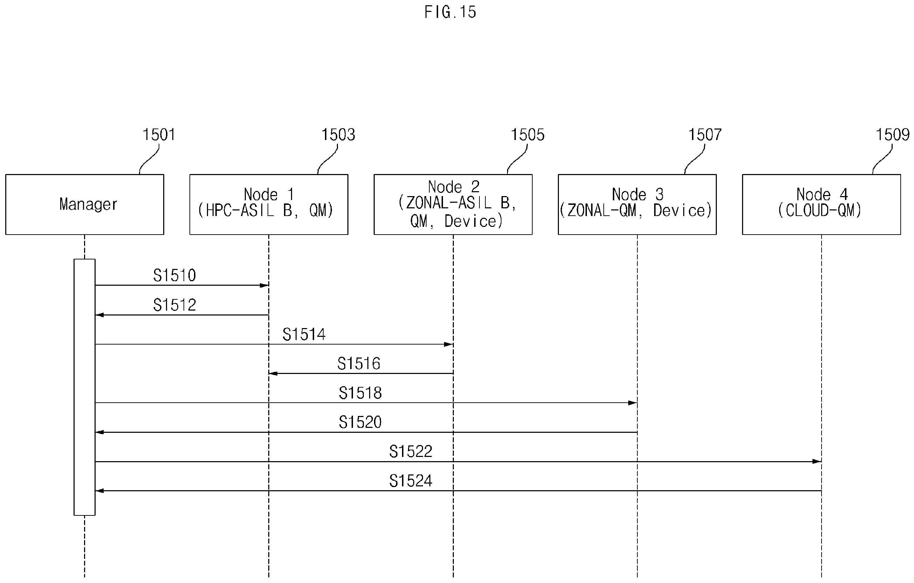

. FIG. 15 is a diagram referred to in the description of scoring each worker node.

. Referring to FIG. 15, a manager 1501 in the master node MN transmits a request for node information to a worker node 1503 in the signal processing device 170 (S1510), and receives node information from the worker node 1503 in the signal processing device 170 (S1512).

. In this case, the node information of the worker node 1503 in the signal processing device 170 may include a safety level at 3 points and a performance level at 3 points.

. The manager 1501 in the master node MN transmits a request for node information to a worker node 1505 in the zonal signal processing device 170z (S1514), and receives node information from the worker node 1505 in the zonal signal processing device 170z (S1516).

. In this case, the node information of the worker node 1505 in the zonal signal processing device 170z may include a safety level at 3 points, a device level at 2 points, and a performance level at 2 points.

. The manager 1501 in the master node MN transmits a request for node information to a worker node 1507 in the zonal signal processing device 170z (S1518), and receives node information from the worker node 1507 in the zonal signal processing device 170z (S1520).

. In this case, the node information of the worker node 1507 in the zonal signal processing device 170z may include a safety level at 0 points, a device level at 2 points, and a performance level at 2 points.

. The manager 1501 in the master node MN transmits a request for node information to a worker node 1509 in the server 400 (S1522), and receives node information from the worker node 1509 in the server 400 (S1524).

. In this case, the node information of the worker node 1509 in the server 400 may include a safety level at 0 points, a device level at 0 points, and a performance level at 2 points.

. As a result, the worker node 1505 in the zonal signal processing device 170z scoring 7 points, the worker node 1503 in the signal processing device 170 scoring 6 points, and the worker node 1505 in the zonal signal processing device 170z scoring 4 points may be selected as top three worker nodes.

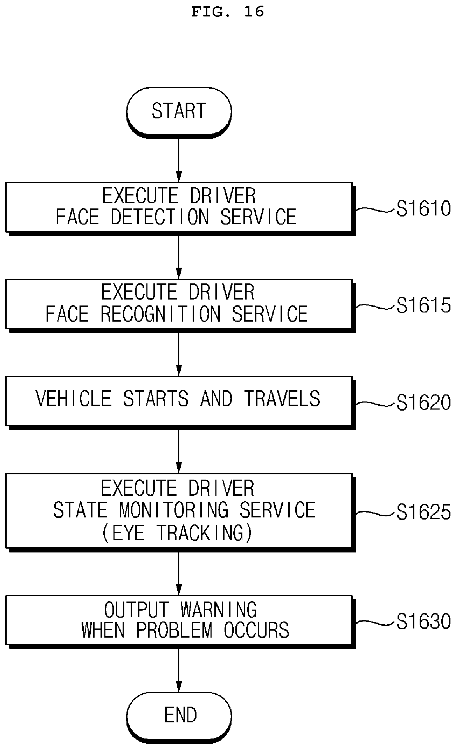

. FIG. 16 is a flowchart illustrating an example of an operation method of executing a service or application.

. Referring to FIG. 16, the processor 175 in the signal processing device 170 may be configured to execute a driver face detection service (S1610) and a driver face recognition service (S1615), based on camera data received from the plurality of zonal signal processing devices 170z.

. For example, the processor 175 may be configured to execute the driver face detection service or driver face recognition service, which is executed before a vehicle starts, on the worker node WN in the plurality of zonal signal processing devices 170z or on the worker node WN in the server 400. Accordingly, the service or application may be efficiently processed by the worker node WN.

. Then, after the vehicle starts and travels (S1620), the processor 175 in the signal processing device 170 may be configured to execute a driver state monitoring service based on the camera data received from the plurality of zonal signal processing devices 170z (S1625), and upon determining that a problem occurs based on a monitoring result, the processor 175 may output a warning (S1630).

. For example, the processor 175 may be configured to execute the driver monitoring service, which is executed after the vehicle starts, on the worker node WN in the signal processing device 170. Accordingly, the service or application may be efficiently processed by the worker node WN.

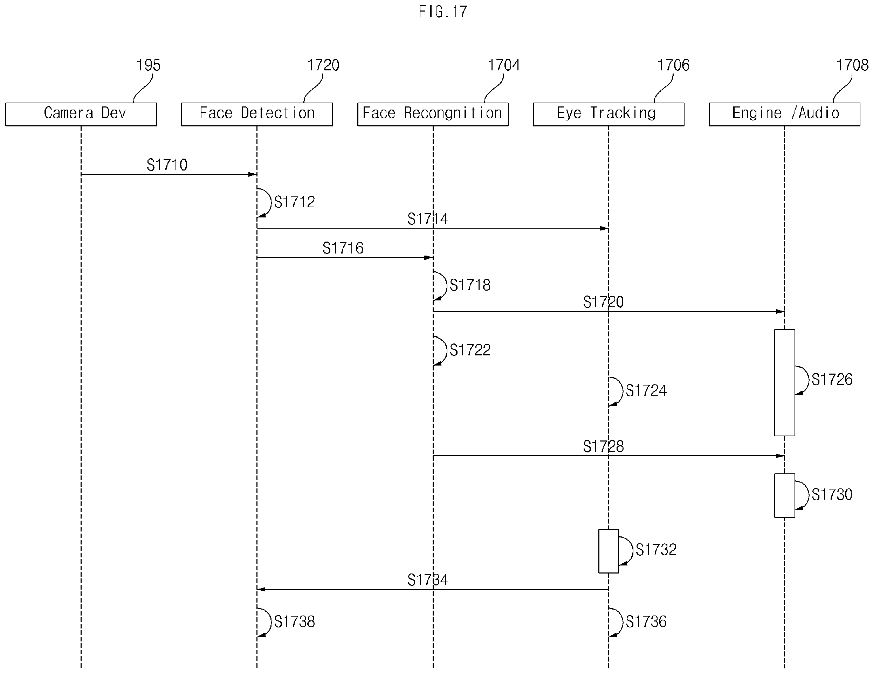

. FIG. 17 is a diagram referred to in the description of FIG. 16.

. Referring to FIG. 17, a camera device 195 transmits camera data to a worker node 1720 on which a driver face detection service is executed (S1710), and the worker node 1720, on which the driver face detection service is executed, executes the driver face detection service based on the camera data (S1712).

. Then, the worker node 1720, on which the driver face detection service is executed, transmits result data to a worker node 1706 on which a driver eye tracking service is executed (S1714).

. Subsequently, the worker node 1720, on which the driver face detection service is executed, transmits the result data to a worker node 1704 on which the driver face detection service is executed (S1716).

. The worker node 1704, on which the driver face detection service is executed, executes the driver face detection service based on the received result data (S1718).

. Next, the worker node 1704, on which the driver face detection service is executed, transmits the result data to a worker node 1708 on which an engine or audio service is executed (S1720).

. Then, the worker node 1708, on which the engine or audio service is executed, executes an engine start service (S1726).

. Subsequently, the worker node 1704, on which the driver face detection service is executed, may stop the driver face detection service after the engine starts (S1722).

. Meanwhile, the worker node 1706, on which the driver eye tracking service is executed, may be configured to perform software duplication when the eye tracking service is executed (S1724). Accordingly, the service may be stably executed.

. Accordingly, the same or similar eye tracking service may be executed on the worker node 1706 as illustrated in FIG. 13A.

. Then, the worker node 1706, on which the driver eye tracking service is executed, may transmit result data to the worker node 1708 on which the engine or audio service is executed (S1730).

. Next, the worker node 1708, on which the engine or audio service is executed, may output a warning sound (S1730) when a problem occurs.

. Then, the worker node 1706, on which the driver eye tracking service is executed, determines occupancy of the worker node in the signal processing device (S1732), and transmits the result data to the worker node 1720, on which the driver face detection service is executed, in the signal processing device 170 (S1734).

. Subsequently, the worker node 1720, on which the driver face detection service is executed, may be configured to execute the service based on the result data (S1738).

. Meanwhile, the worker node 1706, on which the driver eye tracking service is executed, also executes the service on the worker node 1720 which is another worker node, thereby duplicating hardware. Accordingly, the service may be stably executed.

. Meanwhile, the processor 175 may select at least one of the worker node WN in the plurality of zonal signal processing devices 170z, the worker node WN in the server 400, and the worker node WN in the signal processing device 170, based on a safety level of a service or application to be executed.

. For example, in the case in which a safety level of a first service or a first application to be executed is a first level, the processor 175 may select the worker node WN in the plurality of zonal signal processing devices 170z from among the worker node WN in the plurality of zonal signal processing devices 170z, the worker node WN in the server 400, and the worker node WN in the signal processing device 170, and may be configured to execute the first service or the first application on the worker node WN in the plurality of zonal signal processing devices 170z. Accordingly, the service or application may be efficiently processed by the worker node WN.

. In another example, while executing the first service or first application in the plurality of zonal signal processing devices 170z, if a safety level of a second service or a second application to be executed is the first level, the processor 175 may select the worker node WN in one of the plurality of zonal signal processing devices 170z and the worker node WN in the server 400, and may be configured to execute the second service or the second application on the worker node WN in one of the plurality of zonal signal processing devices 170z and the worker node WN in the server 400. Accordingly, the service or application may be efficiently processed by the worker node WN.

. Meanwhile, in the case in which a safety level of a service or application to be executed is a second level higher than the first level, the processor 175 may be configured to execute the service or application on the worker node WN in the signal processing device 170 among the worker node WN in the plurality of zonal signal processing devices 170z, the worker node WN in the server 400, and the worker node WN in the signal processing device 170. Accordingly, the service or application may be efficiently processed by the worker node WN.

. Meanwhile, the processor 175 may be configured to execute a service or application on the worker node WN in the signal processing device 170, based on software duplication, hardware duplication, or hybrid duplication. Accordingly, the service or application may be duplicated for processing. As a result, the service or application may be rapidly and stably processed.

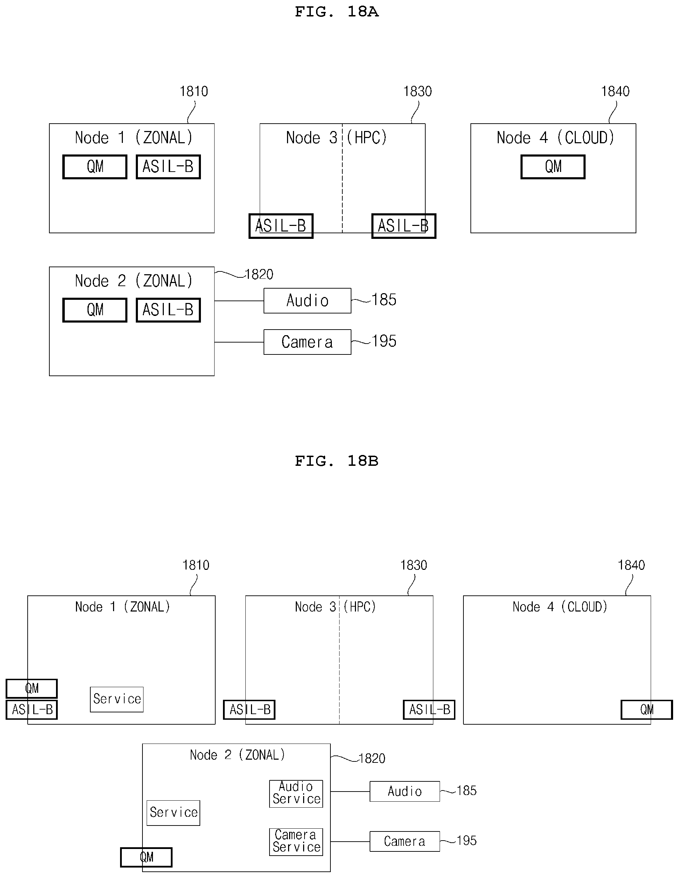

. FIGS. 18A to 18E are diagrams illustrating an example of selecting a plurality of worker nodes.

. FIG. 18A is a diagram illustrating a plurality of nodes.

. Referring to FIG. 18A, node 1 1810 is a first worker node in the zonal signal processing device 170z, node 2 1820 is a second worker node in the zonal signal processing device 170z, node 3 1830 is a worker node in the signal processing device 170, and node 4 1840 is a worker node in the server 400.

. Node 1 1810 may be a worker node corresponding to QM or ASIL B.

. Node 2 1820 and Node 4 1840 may be worker nodes corresponding to QM.

. Node 3 1830 may be a worker node corresponding to ASIL B.

. Meanwhile, the audio device 185 and the camera device 195 may be connected to node 2 1820.

. FIG. 18B is a diagram illustrating an example of executing a driver face detection service on node 1 1810 and node 2 1820.

. Upon receiving camera data from the camera device 195, the master node MN executed in the processor 175 of the signal processing device 170 may select node 1 1810 and node 2 1820, which are nodes corresponding to QM, in response to a safety level of the driver face detection service, executed before a vehicle starts, being a first level corresponding to QM, and may be configured to execute the drive face detection service on node 1 1810 and node 2 1820.

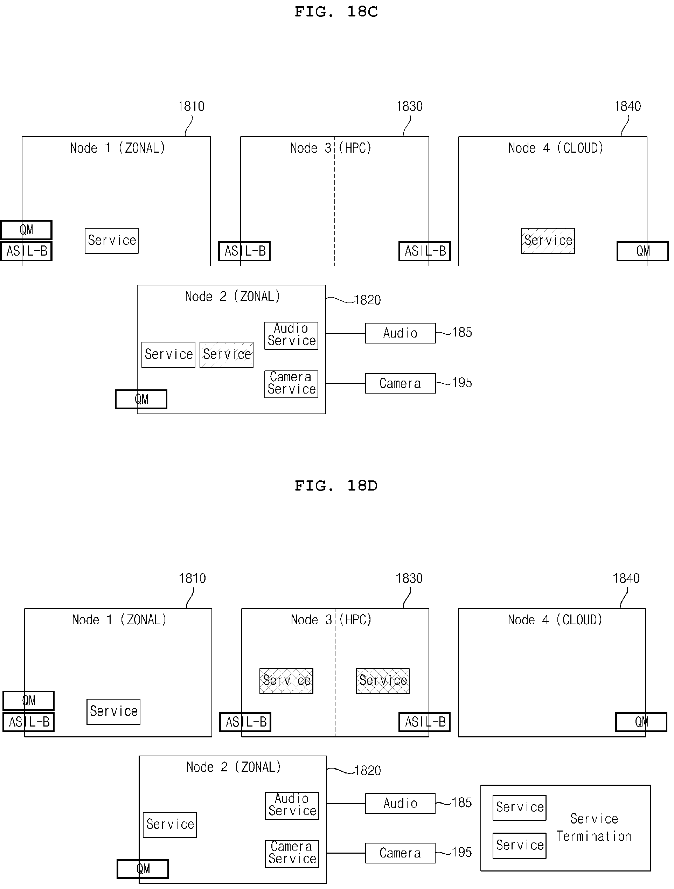

. FIG. 18C is a diagram illustrating an example of executing a driver face recognition service on node 4 1840 and node 2 1820 during execution of the driver face detection service.

. In order to execute the driver face recognition service while executing the driver face detection service, the master node MN executed in the processor 175 of the signal processing device 170 may select node 4 1840 and node 2 1820 in which face data is present, as a safety level of the driver face recognition service is the first level corresponding to QM, and may be configured to execute the drive face recognition service on node 4 1840 and node 2 1820.

. FIG. 18D is a diagram illustrating an example of executing an eye tracking service, which is a driver monitoring service after a vehicle starts, on node 3 1830.

. As a safety level of the eye tracking service, which is the driver monitoring service after the vehicle starts, is a second level corresponding to ASIL B, the master node MN executed in the processor 175 of the signal processing device 170 may be configured to execute the eye tracking service on node 3 1830 which is the worker node WN in the signal processing device 170.

. In this case, the master node MN executed in the processor 175 of the signal processing device 170 may perform software duplication when the eye tracking service is executed on node 3 1830.

. Accordingly, the eye tracking service may be executed on each of a plurality of worker nodes in the signal processing device 170. Accordingly, the service may be stably and rapidly executed.

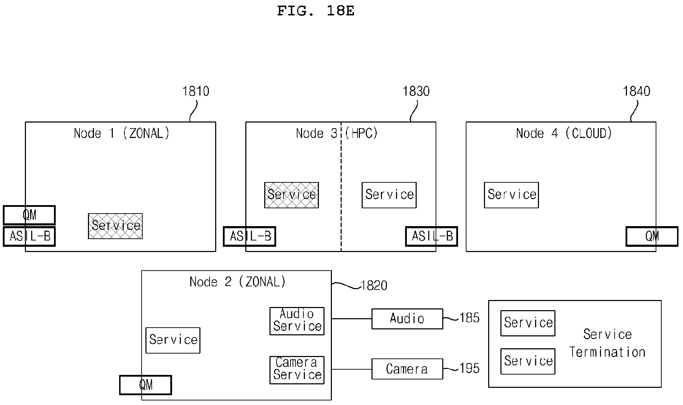

. FIG. 18E is a diagram illustrating an example of executing an eye tracking service, which is a driver monitoring service after a vehicle starts, on node 3 1830 and node 1 1810.

. As a safety level of the eye tracking service, which is the driver monitoring service after a vehicle starts, is the second level corresponding to ASIL B, the master node MN executed in the processor 175 of the signal processing device 170 may be configured to execute the eye tracking service on node 3 1830 and node 1 1810 which are worker nodes WN in the signal processing device 170.

. As described above, hardware duplication may be performed by executing the eye tracking service in each of different signal processing devices. Accordingly, the service may be stably and rapidly executed.

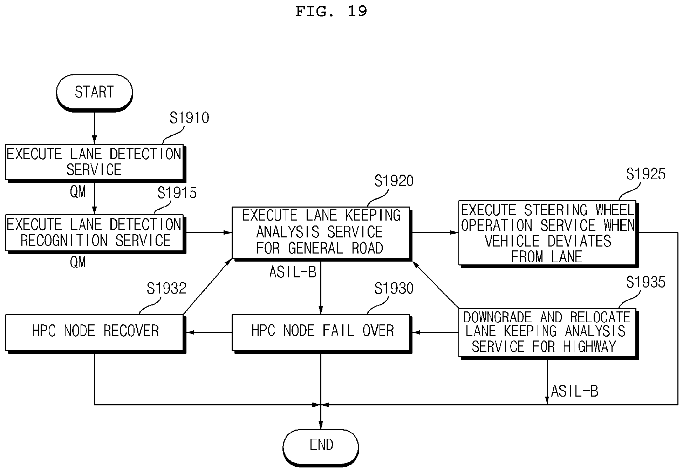

. FIG. 19 is a flowchart illustrating another example of an operation method of executing a service or application.

. Referring to FIG. 19, the processor 175 in the signal processing device 170 may be configured to execute a lane detection service (S1910) and a lane recognition service (S1915) based on camera data received from the plurality of zonal signal processing device 170z.

. For example, the processor 175 in the signal processing device 170 may be configured to execute the lane detection service or lane recognition service, which is executed before a vehicle starts, on the worker node WN in the plurality of zonal signal processing devices 170z or the worker node WN in the server 400. Accordingly, a service or application may be efficiently processed by the worker node WN.

. Then, after the lane recognition (S1915), the processor 175 in the signal processing device 170 executes a lane keeping analysis service for a general road (S1920), and the processor 175 may be configured to execute a steering wheel operation service (S1925) when the vehicle deviates from the lane.

. Meanwhile, when a node failure occurs (S1930) in the signal processing device 170 after the lane keeping analysis for the general road (S1920), the processor 175 in the signal processing device 170 may recover the node in the signal processing device 170 or may be configured to execute a lane keeping analysis service for a highway (S1935).

. Meanwhile, the lane detection service and the lane recognition service may be services corresponding to QM, and the lane keeping analysis service for the general road and the lane keeping analysis service for the highway may be services corresponding to ASIL B.

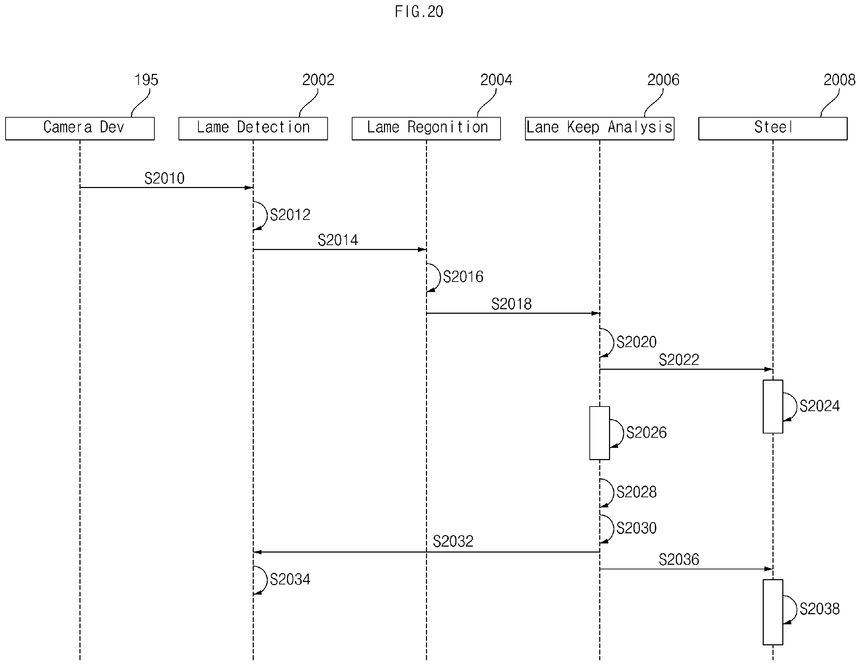

. FIG. 20 is a diagram referred to in the description of FIG. 19.

. Referring to FIG. 20, the camera device 195 transmits camera data to a worker node 2002 on which a lane detection service is executed (S2010), and the worker node 2002, on which the lane detection service is executed, executes the lane detection service based on the camera data (S2012).

. Then, the worker node 2002, on which the lane detection service is executed, transmits result data to a worker node 2004 on which the lane recognition service is executed (S2014).

. The worker node 2004, on which the lane recognition service is executed, executes the lane recognition service based on the received result data (S2016).

. Then, the worker node 2004, on which the lane recognition service is executed, transmits result data to a worker node 2006 on which a lane keeping analysis service is executed (S2018).

. The worker node 2006 on which the lane keeping analysis service is executed, executes the lane keeping analysis service based on the result data (S2020).

. Then, the worker node 2006 on which the lane keeping analysis service is executed, transmits result data to a worker node 2008 on which a steering wheel operation service is executed (S2022).

. Subsequently, the worker node 2008, on which the steering wheel operation service is executed, may be configured to execute the steering wheel operation service when a problem occurs in lane keeping (S2024).

. Meanwhile, in response to failing to acquire a worker node in the signal processing device 170 (S2026), the worker node 2006 on which the lane keeping analysis service is executed acquires a low-quality image of a lane (S2028) and executes the lane keeping analysis service based on the low-quality lane image (S2030).

. Then, the worker node 2006 on which the lane keeping analysis service is executed may transmit result data to the worker node 2002 (S2032), on which the lane detection service is executed, and which is the worker node in the signal processing device 170.

. Next, the worker node 2002 on which the lane detection service is executed may be configured to execute the lane keeping analysis service (S2034).

. Meanwhile, the worker node 2006, on which the lane keeping analysis service is executed, also executes the service on the worker node 2002 which is another worker node, thereby duplicating hardware. Accordingly, the service may be stably executed.

. Meanwhile, after operation 2032 (S2032), the worker node 2006 on which the lane keeping analysis service is executed, transmits result data to the worker node 2008 on which the steering wheel operation service is executed (S2036).

. Then, the worker node 2008 on which the steering wheel operation service is executed, may be configured to execute the steering wheel operation service when a problem occurs in lane keeping (S2038). Accordingly, the service may be stably provided.

. Meanwhile, the processor 175 may be configured to execute the lane detection service, the lane recognition service, the lane keeping analysis service for the general road, or the lane keeping analysis service for the highway based on the camera data from the plurality of zonal signal processing devices 170z. Accordingly, a service or application may be efficiently processed.

. Meanwhile, the processor 175 may be configured to execute the lane detection service on the worker node WN in the plurality of zonal signal processing devices 170z among the worker node WN in the plurality of zonal signal processing devices 170z, the worker node WN in the server 400, and the worker node WN in the signal processing device 170. Accordingly, a service or application may be efficiently processed by the worker node WN.

. Meanwhile, the processor 175 may be configured to execute the lane recognition service on the worker node WN in any one zonal signal processing device 170z and the worker node WN in the server 400 among the worker node WN in the plurality of zonal signal processing devices 170z, the worker node WN in the server 400, and the worker node WN in the signal processing device 170. Accordingly, a service or application may be efficiently processed by the worker node WN.

. Meanwhile, the processor 175 may be configured to execute the lane keeping analysis service for the general road on the worker node WN in the signal processing device 170 and the worker node WN in any one zonal signal processing device 170z among the worker node WN in the plurality of zonal signal processing devices 170z, the worker node WN in the server 400, and the worker node WN in the signal processing device 170. Accordingly, a service or application may be efficiently processed by the worker node WN.

. Meanwhile, the processor 175 may be configured to execute the lane keeping analysis service for the highway on the worker node WN in any one zonal signal processing device 170z among the worker node WN in the plurality of zonal signal processing devices 170z, the worker node WN in the server 400, and the worker node WN in the signal processing device 170. Accordingly, a service or application may be efficiently processed by the worker node WN.

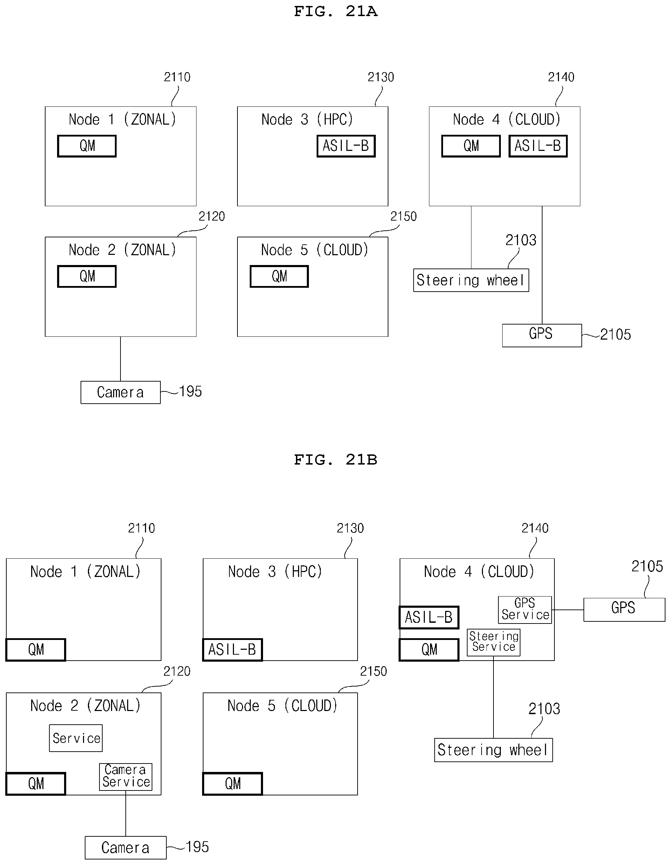

. FIGS. 21A to 21F are diagrams illustrating an example of selecting a plurality of worker nodes.

. FIG. 21A is a diagram illustrating a plurality of nodes.

. Referring to FIG. 21A, node 1 2110 is a first worker node in the zonal signal processing device 170z, node 2 2120 is a second worker node in the zonal signal processing device 170z, node 3 2130 is a worker node in the signal processing device 170, node 4 2140 is a third worker node in the zonal signal processing device 170z, and node 5 2150 is a worker node in the server 400.

. Node 1 2110, node 2 2120, and node 5 2150 may be worker nodes corresponding to QM.

. Node 4 2140 may be a worker node corresponding to QM or ASIL B.

. Node 3 2130 may be a worker node corresponding to ASIL B.

. Meanwhile, a steering wheel device 2103 and a GPS device 2105 may be connected to node 5 2150.

. FIG. 21B is a diagram illustrating an example in which a lane detection service is executed on node 1 2110 and node 2 2120.

. Upon receiving camera data from the camera device 195, the master node MN executed in the processor 175 of the signal processing device 170 may select node 1 2110 and node 2 2120, which are nodes corresponding to QM, as a safety level of the lane detection service is a first level corresponding to QM, and may be configured to execute the lane detection service on node 1 2110 and node 2 2120.

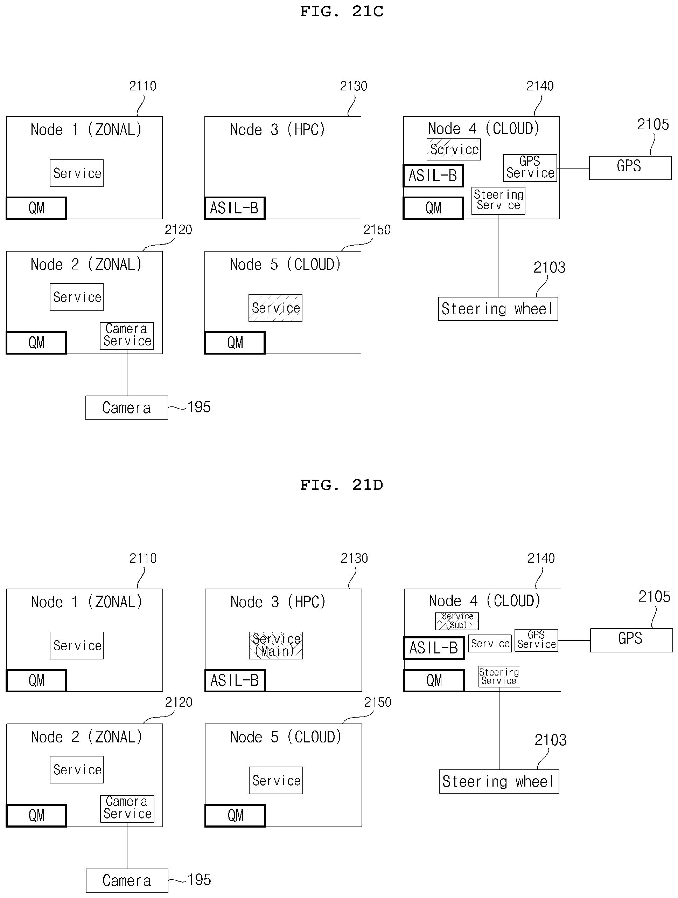

. FIG. 21C is a diagram illustrating an example in which a lane recognition service is executed on node 4 2140 and node 5 2150 while a lane detection service is executed.

. In order to execute the lane recognition service while executing the lane detection service, the master node MN executed in the processor 175 of the signal processing device 170 may select node 4 2140 and node 2 2150 as a safety level of the lane recognition service is the first level corresponding to QM, and may be configured to execute the lane recognition service on node 4 2140 and node 2 2150.

. FIG. 21D is a diagram illustrating an example in which a lane keeping analysis service for a general road is executed on node 3 2130 and node 4 2140.

. As a safety level of the lane keeping analysis service for the general road is a second level corresponding to ASIL B, the master node MN executed in the processor 175 of the signal processing device 170 may be configured to execute the lane keeping analysis service for the general road on node 3 2130 and node 4 2140.

. In this case, as the lane keeping analysis service is executed on node 3 2130 and node 4 2140 which are different signal processing devices, the master node MN executed in the processor 175 of the signal processing device 170 may duplicate hardware as illustrated in FIG. 13B. Accordingly, the service may be stably and rapidly executed.

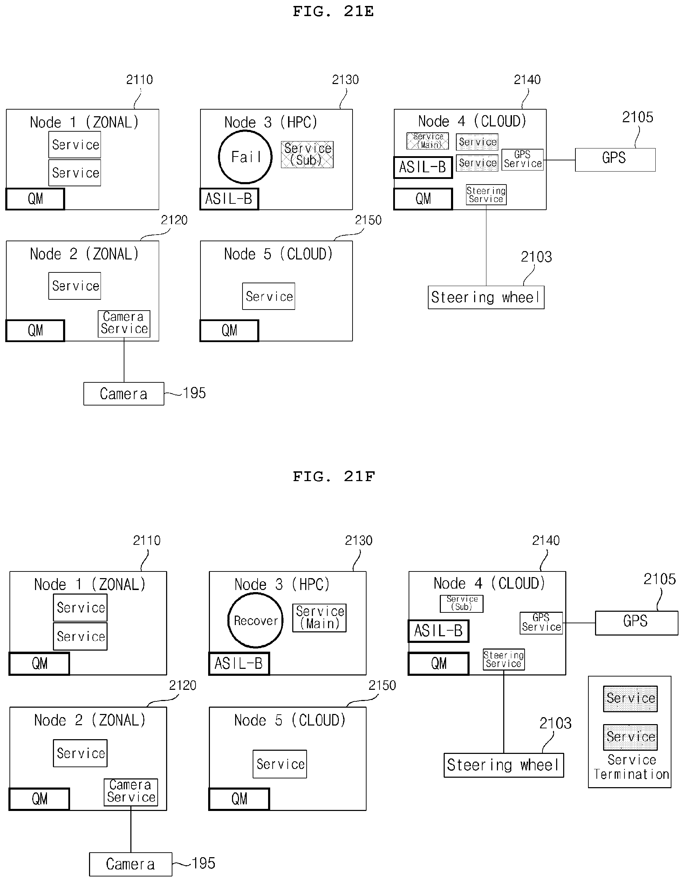

. FIG. 21E is a diagram illustrating an example in which the lane keeping analysis service for the general road, which is to be executed on node 3 2130, is not executed.

. However, the lane keeping analysis service for the general road is executed on node 4 2140, such that the service may be stably executed.

. Meanwhile, in order to execute the lane keeping analysis service for the highway, the master node MN executed in the processor 175 of the signal processing device 170 may be configured to execute the lane keeping analysis service for the highway on node 4 2140 in consideration of the condition of node 3 2130.

. That is, as a safety level of the lane keeping analysis service for the highway is the second level corresponding to ASIL B, the master node MN executed in the processor 175 of the signal processing device 170 may be configured to execute the lane keeping analysis service for the highway on node 4 2140.

. Meanwhile, in order to stably provide the service, the master node MN executed in the processor 175 of the signal processing device 170 may be configured to perform software duplication on node 4 2140 as illustrated herein.

. That is, two lane keeping analysis services for the highway are executed on node 4 2140. Accordingly, the lane keeping analysis services for the highway may be stably executed.

. Meanwhile, FIG. 21F illustrates an example in which the lane keeping analysis service for the general road is recovered at node 3 2130.

. Meanwhile, in the case in which the lane keeping analysis service for the general road is recovered at node 3 2130, the processor 175 in the signal processing device 170 may be configured to terminate the lane keeping analysis service for the highway.

. Accordingly, two lane keeping analysis services for the highway executed on node 4 2140 are ended.

. It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to receive data by wire from a plurality of zonal signal processing devices or a communication device and process the received data,
wherein the processor is configured to execute a hypervisor and execute a plurality of virtual machines on the hypervisor,
wherein some virtual machine among the plurality of virtual machines is configured to operate as a master node of orchestration, and another virtual machine among the plurality of virtual machines is configured to operate as a worker node of orchestration.

2. The signal processing device of claim 1, wherein the processor is configured to select at least one of a worker node in the plurality of zonal signal processing devices, a worker node in a server, or a worker node in the signal processing device, and execute a service or application on the selected worker node.

3. The signal processing device of claim 1, wherein the master node is configured to execute an application controller, a node controller, a scheduler, and an orchestration server,
wherein the worker node is configured to execute an orchestration proxy, container runtime, container, and node manager.

4. The signal processing device of claim 1, wherein the master node is configured to transmit a command to at least one worker node based on scheduling, and a container in the worker node is configured to receive the command and operate based on the command.

5. The signal processing device of claim 1, wherein the master node is configured to selectively duplicate a service or application or perform one of software duplication, hardware duplication, and hybrid duplication, based on a safety level of a service or application, available resources, or a state of the worker node.

6. The signal processing device of claim 1, wherein the processor is configured to select at least one of the worker node in the plurality of zonal signal processing devices, the worker node in the server, or the worker node in the signal processing device, based on a safety level of a service or application to be executed.

7. The signal processing device of claim 1, wherein in response to a safety level of a first service or a first application to be executed being a first level, the processor is configured to select the worker node in the plurality of zonal signal processing devices from among the worker node in the plurality of zonal signal processing devices, the worker node in the server, or the worker node in the signal processing device, and execute the first service or the first application on the worker node in the plurality of zonal signal processing devices.

8. The signal processing device of claim 7, wherein while executing the first service or first application in the plurality of zonal signal processing devices, in response to a safety level of a second service or a second application to be executed being the first level, the processor is configured to select the worker node in one of the plurality of zonal signal processing devices and the worker node in the server, and execute the second service or the second application on the worker node in one of the plurality of zonal signal processing devices and the worker node in the server.

9. The signal processing device of claim 1, wherein in response to a safety level of a service or application to be executed being a second level higher than the first level, the processor is configured to execute the service or application on the worker node in the signal processing device among the worker node in the plurality of zonal signal processing devices, the worker node in the server, or the worker node in the signal processing device.

10. The signal processing device of claim 1, wherein the processor is configured to execute the service or application on the worker node in the signal processing device, based on software duplication, hardware duplication, or hybrid duplication.

11. The signal processing device of claim 1, wherein the processor is configured to execute a driver face detection service or a driver face recognition service, which is executed before a vehicle starts, on the worker node in the plurality of zonal signal processing devices or the worker node in the server.

12. The signal processing device of claim 11, wherein the processor is configured to execute a driver monitoring service, which is executed after the vehicle starts, on the worker node in the signal processing device.

13. The signal processing device of claim 1, wherein based on camera data from the plurality of zonal signal processing devices, the processor is configured to execute a lane detection service, a lane recognition service, a lane keeping analysis service for a general road, or a lane keeping analysis service for a highway.

14. The signal processing device of claim 13, wherein the processor is configured to execute the lane detection service on the worker node in the plurality of zonal signal processing devices, among the worker node in the plurality of zonal signal processing devices, the worker node in the server, and the worker node in the signal processing device.

15. The signal processing device of claim 14, wherein the processor is configured to execute the lane recognition service on the worker node in one of the plurality of zonal signal processing devices and the worker node in the server, among the worker node in the plurality of zonal signal processing devices, the worker node in the server, or the worker node in the signal processing device.

16. The signal processing device of claim 14, wherein the processor is configured to execute the lane keeping analysis service for the general road on the worker node in the signal processing device and the worker node in one of the plurality of zonal signal processing devices, among the worker node in the plurality of zonal signal processing devices, the worker node in the server, or the worker node in the signal processing device.

17. The signal processing device of claim 14, wherein the processor is configured to execute the lane keeping analysis service for the highway on the worker node in one of the plurality of zonal signal processing devices, among the worker node in the plurality of zonal signal processing devices, the worker node in the server, or the worker node in the signal processing device.

18. A signal processing device comprising a processor configured to receive data by wire from a plurality of zonal signal processing devices or a communication device and process the received data,
wherein the processor is configured to execute a hypervisor and execute a plurality of virtual machines on the hypervisor,
wherein some virtual machine among the plurality of virtual machines is configured to operate as a master node of orchestration,
wherein the master node is configured to selectively duplicate a service or application or perform one of software duplication, hardware duplication, and hybrid duplication, based on a safety level of a service or application, available resources, or a state of the worker node.

19. The signal processing device of claim 18, wherein the master node is configured to selectively duplicate a service or application or perform one of software duplication, hardware duplication, or hybrid duplication, on at least one of the worker node in the plurality of zonal signal processing devices, the worker node in the server, or the worker node in the signal processing device, based on a safety level of the service or application, available resources, or a state of the worker node.

20. A vehicle communication device comprising the signal processing device of any one of claims 1 to 19.
